(19) Europäisches Patentamt
European Patent Office
Office européen des brevets

(11) EP 1 893 716 B1

(12) # EUROPÄISCHE PATENTSCHRIFT

(45) Veröffentlichungstag und Bekanntmachung des Hinweises auf die Patenterteilung:
**13.07.2016 Patentblatt 2016/28**

(21) Anmeldenummer: **06763258.8**

(22) Anmeldetag: **24.05.2006**

(51) Int Cl.:
***C09K 5/10*** (2006.01) ***C09K 5/12*** (2006.01)

(86) Internationale Anmeldenummer:
**PCT/EP2006/062567**

(87) Internationale Veröffentlichungsnummer:
**WO 2006/134015 (21.12.2006 Gazette 2006/51)**

(54) **NEUARTIGE ARBEITSMEDIEN FÜR KÄLTEPROZESSE**

NOVEL WORKING MEDIA FOR REFRIGERATION PROCESSES

MILIEUX DE TRAVAIL D'UN GENRE NOUVEAU POUR PROCESSUS DE RÉFRIGÉRATION

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **17.06.2005 DE 102005028451**

(43) Veröffentlichungstag der Anmeldung:
**05.03.2008 Patentblatt 2008/10**

(73) Patentinhaber: **Evonik Degussa GmbH**
**45128 Essen (DE)**

(72) Erfinder:
- **JORK, Carsten**
  **60437 Frankfurt (DE)**
- **SEILER, Matthias**
  **64347 Griesheim (DE)**
- **WEYERSHAUSEN, Bernd**
  **45127 Essen (DE)**

(74) Vertreter: **Thiele, Georg Friedrich**
**Evonik Degussa GmbH**
**DG-IPM-PAT**
**Postcode 84/339**
**Rodenbacher Chaussee 4**
**63457 Hanau (DE)**

(56) Entgegenhaltungen:
**WO-A-03/074494** **WO-A-2004/090066**
**WO-A-2005/113702** **DE-A1- 3 623 680**

- **KIM ET AL: "Refractive index and heat capacity of 1-butyl-3-methylimidazolium bromide and 1-butyl-3-methylimidazolium tetrafluoroborate, and vapor pressure of binary systems for 1-butyl-3-methylimidazolium bromide + trifluoroethanol and 1-butyl-3-methylimidazolium tetrafluoroborate + trifluoroethanol" FLUID PHASE EQUILIBRIA, Bd. 218, Nr. 2, 2004, Seiten 215-220, XP002394560 in der Anmeldung erwähnt**
- **WU B ET AL: "Novel Ionic liquid thermal storage for solar thermal electric power systems" PROCEEDINGS OF SOLAR FORUM. SOLAR ENERGY: THE POWER TO CHOOSE, XX, XX, April 2001 (2001-04), Seite complete, XP002341969**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 1 893 716 B1

## Beschreibung

Die Erfindung betrifft neuartige Arbeitsmedien für Kälteprozesse und beschreibt insbesondere die Verwendung von unter Normalbedingungen bzw. bei Temperaturen < 60 °C flüssigen organischen Salzen als Additiv oder Sorptionsstoff für Kälteprozesse. Die Verwendung der erfindungsgemäß verwendeten oder mitverwendeten Substanzen als Additiv oder Sorptionsstoff führt zu Verbesserungen der Eigenschaften des Arbeitsmediums. Darüber hinaus beinhaltet die Erfindung neuartige Verfahrensvarianten für Kälteprozesse mit Vorteilen gegenüber dem Stand der Technik.

Stand der Technik:

Als Kälteprozesse oder Kältemaschinen werden in dieser Erfindung Wärmepumpen, Kompressionsdampfkälteanlagen, Absorptionskälteanlagen, Dampfstrahlkälteanlagen und weitere Sorptionskältemaschinen wie Resorptions- und Adsorptionskältemaschinen kontinuierlicher und periodischer betriebsweise sowie Diffusionskältemaschinen verstanden, wie in Vauck, W.R.A. und Müller, H.A., Grundoperationen chemischer Verfahrenstechnik, 10. Auflage, Leipzig 1994, ISBN 3-342-00629-3 und in Lueger, Lexikon der Technik: Band 16 Lexikon der Verfahrenstechnik, 4. Auflage, Stuttgart 1970 beschrieben.

Generell basiert eine Kältemaschine oder Wärmepumpe auf dem Kreislauf eines Arbeitsmediums (auch als Kältemittel bezeichnet), wobei auf verschiedenen Druckniveaus Wärme zu- bzw. abgeführt wird. Das Grundprinzip wird durch einen so genannten gegenläufigen Clausius-Rankine-Prozess beschrieben und stellt somit eine direkte Umkehrung einer Wärmekraftmaschine dar. Hierbei durchläuft das Kältemittel die Arbeitsschritte (a) Verdichtung, (b) Kondensation, (c) Entspannung und (d) Verdampfung.

Dabei wird Wärme von einem niederen auf ein höheres Temperaturniveau gehoben. Ziel ist es dabei mit vorgegebenem Aufwand an mechanischer, elektrischer oder thermischer Energie eine möglichst große Wärmemenge auf ein höheres Temperaturniveau zu heben und dort abzuführen. Hierbei ist es möglich, die Änderung der Temperatur- oder des Druckniveaus durch eine einzige oder mehrere Stufen zu realisieren.

Der Unterschied zwischen Kältemaschinen und Wärmepumpen ergibt sich aus dem genutzten Temperaturniveau. Bei Wärmepumpen wird die (in der Regel am Kondensator) auf hohem Temperaturniveau anfallende Wärme z.B. zu Heizzwecken genutzt, während bei einer Kältemaschine die (in der Regel am Verdampfer) zuzuführende Wärme zu Kühlzwecken verwendet wird.

Wärmepumpen können auch in Form von Hochtemperatur Brennwerttechnik ausgeführt sein, wobei die Kondensationswärme des in Rauchgasen enthaltenen Wasserdampfes oberhalb des Rauchgastaupunktes genutzt wird. Hierbei wird ein Teil des Wasserdampfes im Abgas in einem Absorber von einer hygroskopischen Waschlösung (z.B. LiBr-Lösung) aufgenommen und anschließend in einem Desorber bei einer höheren Temperatur wieder ausgetrieben. Sowohl die aus Abkühlung und Kondensation des ausgetriebenen Wasserdampfes, als auch die aus der Abkühlung der Waschlösung vor Rückführung in den Absorber anfallende Wärme kann nun auf einem hohen Temperaturniveau genutzt werden.

Kompressionsdampfkälteanlagen oder Kompressionskältemaschinen führen den oben dargestellten Kreisprozess charakteristischerweise unter Verwendung von mechanischen Verdichtern durch. Diese komprimieren das Kältemittel, welches mindestens zum Teil dampfförmig oder überkritisch vorliegt.

Dampfstrahlkälteanlagen besitzen Dampfstrahlverdichter anstelle von mechanischen Verdichtern und verwenden Wasser als Kältemittel. Sie verdampfen bei geringem Arbeitsdruck einen Teil des Wassers und entziehen dem Restwasser, das als Kälteträger eingesetzt werden kann, die Verdampfungswärme. Dampfstrahlkälteanlagen können auch als offene Prozesse ausgeführt sein.

In Absorptionskältemaschinen ersetzt man charakteristischerweise im oben dargestellten Kreisprozess mindestens eine Stufe der mechanischen Verdichtung des dampfförmigen Kältemittels durch eine so genannte thermische Verdichtung (alternative Verdichtung). Diese besteht aus der Absorption des dampfförmigen Kältemittels in einem Absorptionsmittel, der Verdichtung des resultierenden flüssigen Stoffgemisches und einer sich anschließenden Wärmezufuhr zum Austreiben des Kältemittels auf hohem Druckniveau.

Es gibt unterschiedliche Ausführungen von Absorptionskältemaschinen und Wärmepumpen, wie in Lueger, Lexikon der Technik: Band 16 Lexikon der Verfahrenstechnik, 4. Auflage, Stuttgart 1970 und in den Übersichtsbeiträgen von Ziegler, F., Int. J. Therm. Sci. 38 (1999) 191-208, Wongsuwan, W. et al., Applied Thermal Engineering 21 (2001) 1489-1519 und Cheung, K. et al., International Journal of Refrigeration 19 (1996) 473-481 beschrieben. Alle Absorptionskältemaschinen beruhen auf der Verwendung eines so genannten Arbeitsmediums, bestehend aus einem Kältemittel und einem Sorptionsstoff (auch Absorbens oder Absorptionsflüssigkeit genannt). Der Sorptionsstoff muss bei kontinuierlich arbeitenden Sorptionskältemaschinen flüssig sein, wobei die Konzentration des Kältemittels in der Absorptionsflüssigkeit vom Absorptionsvermögen, dem Druck und der Temperatur abhängig ist. Innerhalb des Druck- und Temperaturbereichs, den Kältemittel und Sorptionsstoff in Sorptionskältemaschinen durchlaufen, müssen beide Stoffe mischbar sein, wobei sie kein Azeotrop bilden dürfen. Dem Arbeitsmedium können auch ein oder mehrere Additive

beigemischt werden mit dem Ziel, das Absorptionsvermögen, die Wärmekapazität oder den Wärmeübergang zu verbessern sowie die Erstarrungstemperatur des Arbeitsmediums und Zersetzungserscheinungen zu reduzieren. Das ideale Arbeitsmedium setzt sich gemäß Lueger, Lexikon der Technik: Band 16 Lexikon der Verfahrenstechnik, 4. Auflage, Stuttgart 1970, aus einem Kältemittel mit flacher Dampfdruckkurve und somit vergleichsweise kleinen Druckunterschieden in der Anlage, hoher Verdampfungswärme und einem Sorptionsstoff mit möglichst kleinem Dampfdruck, tiefen Erstarrungstemperaturen, kleiner spezifischen Wärmekapazität sowie einer kleinen Mischungsenthalpie, zusammen. Darüber hinaus sollte ein vorteilhaftes Arbeitsmdium chemisch und thermisch stabil, ungiftig, nicht brennbar, nicht umweltgefährdend und nicht korrosiv sein. Wie in Lueger, Lexikon der Technik: Band 16 Lexikon der Verfahrenstechnik, 4. Auflage, Stuttgart 1970 beschrieben setzten sich die wichtigsten in der Praxis angewandten Arbeitsmedien aus (a) Ammoniak als Kältemittel und Wasser als Sorptionsstoff oder (b) Wasser als Kältemittel und Schwefelsäure oder einer wässrigen Lithiumbromidlösung oder einer wässrigen Lithiumchloridlösung als Sorptionsstoff oder (c) Methylamin oder Dimethylamin oder Ethylamin als Kältemittel und Wasser als Sorptionsstoff oder (d) Kohlenwasserstoffe wie Ethan oder Propan als Kältemittel und höher siedende Kohlenwasserstoffe als Sorptionsstoff zusammen. Die Arbeitsgruppe von Nezu [Nezu, Y.; Hisada, N.; Ishiyama, T.; Watanabe, K. Thermodynamic properties of working-fluid pairs with R-134a for absorption refrigeration system. Natural Working Fluids 2002, IIR Gustav Lorentzen Conference, 5th, Guangzhou, China, Sept. 17-20, 2002 (2002), 446-453. CODEN: 69EZUG CAN 140:113462 AN 2004:79935 CAPLUS] hat für die Verwendung von (e) halogenierten Kohlenwassserstoffen, wie z.B. R134a ($CF_3$-$CH_2$-F) als Kältemittel N,N-Dimethylformamid oder N,N-Dimethylacetamid als Sorptionsstoff vorgeschlagen. Kim, K.-S. et al., stellen in ihren Beiträgen (1) "Ionic Liquids as new working fluids for use in absorption heat pumps or chillers" (fifteenth symposium on thermophysical properties, Boulder, CO, USA, June 22-27, 2003) und (2) "Refractive index and heat capacity of 1-butyl-3-methylimidazolium bromide and 1-butyl-3-methylimidazolium tetrafluoroborate and vapor pressure of binary systems for 1-butyl-3-methylimidazolium bromide + trifluoroethanol and 1-butyl-3-methylimidazolium tetrafluoroborate + trifluoroethanol" Fluid Phase Equilibria 218 (2004) 215-220 Arbeitsmedien mit (f) 2,2,2-Trifluoroethanol als Kältemittel und 1-Butyl-3-Methyl-Imidazolium Tetrafluoroborat oder 1-Butyl-3-Methyl-Imidazolium Bromid als Sorptionsstoff vor. Die WO 2005/113702 A1 nennt Arbeitsmedien enthaltend als Kältemittel Wasser oder Ammoniak und als Sorptionsstoff bestimmte Alkylimidazoliumacetatsalze und Alkylimidazoliummethylsulfatsalze.

Als Arbeitsmedium wird im Rahmen dieser Erfindung die an mindestens einer Stelle des Kälteprozesses auftretende maximale Anzahl an Systemkomponenten verstanden. Bei Absorptionskälteanlagen ist das Arbeitsmedium somit eine Mischung bestehend aus Sorptionsstoff und Kältemittel und ggf. Zusätzen an Additiven. Bei Kälteanlagen oder Wärmepumpenanlagen soll im Rahmen dieser Erfindung als Arbeitsmedium jenes Gemisch verstanden werden, das im Verdichter komprimiert wird.

Zur Verbesserung der Eigenschaften eines Arbeitsmediums können Additive zugesetzt werden wie in Kim, J.-S. et al., Applied Thermal Engineering 19 (1999) 217-225 oder Glebov, D. und Setterwall, F., International Journal of Refrigeration 25 (2002) 538-545 oder Ziegler, F. und Grossman, G., International Journal of Refrigeration 19 (1996) 301-309 beispielhaft beschrieben.

Kim, J.-S. et al., Applied Thermal Engineering 19 (1999) 217-225 und Chua, H.T. et al., International Journal of Refrigeration 23 (2000) 412-429 sowie Yoon, J.-I. und O.-K. Kwon, Energy 24 (1999) 795-809 schlagen beispielsweise als Additiv zu dem oben aufgeführten Arbeitsmedium für Absorptionskältemaschinen LiBr + $H_2O$ folgende Stoffe vor: (a) $H_2N(CH_2)_2OH$, (b) $HO(CH_2)_3OH$ oder (c) $(HOCH_2)_2NH$.

Nachteile des Standes der Technik bestehen darin, dass die bekannten Arbeitsmedien ein beschränktes Absorptionsverhalten zeigen oder Substanzen enthalten, die eine zu hohe Kristallisationstemperatur besitzen, ein hohes Gefahrenpotenzial (bedingt durch Toxizität oder Brennbarkeit) aufweisen, umweltbelastende Eigenschaften (beispielsweise durch Schädigung der Ozonschicht, oder durch ein großes Treibhauspotenzial) besitzen, korrosiv sind oder einen sehr großen Dampfdruck besitzen. Häufig lassen sich die Arbeitsmedien in Absorptionskältemaschinen nach der Kompression nur sehr unvollständig in Kältemittel und Sorptionsstoff trennen, da herkömmliche hochschmelzende Sorptionsstoffe (wie z.B. Lithiumbromid) in konzentriertem Zustand auskristallisieren. Niedrigschmelzende Sorptionsstoffe (wie z.B. N,N-Dimethylformamid) besitzen i.d.R. eine signifikante Flüchtigkeit, die bei starker Konzentration des Sorptionsstoffes zu einer Verunreinigung des Kältemittels führt, wodurch die Installation von weiteren Trennapparaturen hinter dem Austreiber nötig wird. Die Rückführung von ungenügend aufkonzentrierten Sorptionsstoffen von dem Austreiber zurück zum Absorber ist jedoch nachteilig, da die Sorptionsstoffe dort folglich nur entsprechend geringe Mengen Kältemittel aufnehmen können und somit unerwünscht große sowie energetisch nachteilige Umlaufströme entstehen.

Aufgabe der vorliegenden Erfindung war es, ein Arbeitsmedium aufzufinden, das zur Verwendung in Kälteprozesse und/oder Kältemaschinen, insbesondere in Absorptionswärmepumpen, Absorptionskältemaschinen, Dampfstrahlkältemaschinen, Kompressionskältemaschinen und/oder Wärmetransformatoren, geeignet ist und das mindestens einen der genannten Nachteile, vorzugsweise möglichst viele der genannten Nachteile, nicht aufweist.

Weiterhin war es die Aufgabe, ein Sorptionsmittel zu finden, das einen ausreichend geringen Dampfdruck aufweist, um Probleme bei der Stofftrennung möglichst zu vermeiden, das bei den zu erwartenden Temperaturen stabil ist, das mit dem Kältemittel, wie z. B. Wasser, Ammoniak oder Trifluorethanol, möglichst gut mischbar ist sowie dieses

in geeigneter Weise absorbieren kann.

Darüber hinaus ist es vorteilhaft, ein Sorptionsmittel zu finden, das möglichst im gesamten betrachteten Temperaturbereich flüssig ist, um somit Kristallisationsprobleme zu verhindern und möglichst das gesamte im Sorptionsmittel vorhandene Kältemittel, wie z.B. Wasser, Ammoniak oder Trifluorethanol, entziehen und nutzen zu. können.

Gelöst werden diese Aufgaben sowie weitere, die zwar nicht explizit genannt werden, sich aber aus den hierin diskutierten Zusammenhängen wie selbstverständlich ableiten lassen oder sich aus diesen zwangsläufig ergeben, durch das in Anspruch 1 beschriebene Arbeitsmedium. Zweckmäßige Abwandlungen dieses Arbeitsmediums werden in den auf Anspruch 1 rückbezogenen Unteransprüchen unter Schutz gestellt. Die weiteren Ansprüche beschreiben besonders geeignete Anwendungsgebiete des erfindungsgemäßen Arbeitsmediums.

Dadurch, dass ein Arbeitsmedium für Kälteprozesse und/oder Kältemaschinen, insbesondere Absorptionswärmepumpen, Absorptionskältemaschinen, Dampfstrahlkältemaschinen, Kompressionskältemaschinen, Wärmepumpen und/oder Wärmetransformatoren mindestens ein Kältemittel und mindestens einen Sorptionsstoff enthält, wobei der Sorptionsstoff mindestens ein nichtflüchtiges unter Normalbedingungen flüssiges organisches Salz enthält oder eine Mischung organischer Salze, mit der Maßgabe, dass diese unter Normalbedingungen flüssig ist, und wobei das Salz oder die Mischung eine thermische Stabilität größer 150°C besitzt und eine Viskosität gemäß DIN 53 019 bei 20°C in einem Bereich von 1 bis 15.000 mPa·s aufweist und wobei das Anion des organischen Salzes ausgewählt ist aus Hydroxid, Dicyanamid, Chlorid, Phosphat, Polyetherphosphaten, Alkylsulfonaten, Alkylsulfaten und Alkylcarboxylaten, und wobei Arbeitsmedien, die als Sorptionsstoff 1-Ethyl-3-methylimidazolium-methylsulfat, 1-Ethyl-3-methylimidazoliumacetat, 1-(1-Butyl)3-methylimidazolium-methylsulfat, 1-(1-Butyl)3-methylimidazoliumacetat, 1-(1-Dodecyl)3-methylimidazolium-methylsulfat, 1-(1-Tetradecyl)3-methylimidazolium-methylsulfat oder 1-(1-Hexadecyl)3-methylimidazolium-methylsulfat enthalten, ausgenommen sind, gelingt es auf nicht ohne weiteres vorhersehbare Weise,

- ➢ ein hocheffizientes Arbeitsmedium anzugeben, welches insbesondere ein verbessertes Absorptionsverhalten in Kälteprozesse und/oder Kältemaschinen, v. a. in Absorptionswärmepumpen, Absorptionskältemaschinen, Dampfstrahlkältemaschinen, Kompressionskältemaschinen und/oder Wärmetransformatoren, aufweist,
- ➢ ein nicht toxisches, nicht explosives Arbeitsmedium bereitzustellen,
- ➢ ein Arbeitsmedium mit einer vergleichsweise hohen chemischen Beständigkeit zugänglich zu machen,
- ➢ die Sorptionsmittelflüchtigkeit und dadurch das Gefahrenpotenzial sowie den Trennaufwand zu reduzieren,
- ➢ den Energiebedarf zu vermindern,
- ➢ die Umwelt weniger zu belasten und/oder
- ➢ wie aus dem Stand der Technik bekannten Kristallisations- oder Korrosionsprobleme zu vermeiden.

Insbesondere wurde gefunden, dass unter Verwendung der ionischen Flüssigkeiten der Partialdruck von Kältemitteln, insbesondere von Wasser, deutlich erniedrigt werden kann, wobei sich der Einsatz von Diethyl-polypropoxymethylammoniumchlorid, Bis(2-hydroxyethyl)dimethylammoniummethylsulfonat und/oder 1-Ethyl-3-methylimidazoliummethansulfonat ganz besonders bewährt hat, da er eine Erniedrung um den Faktor $\geq$ 4,7 ermöglicht.

Die Absorptionsmittel des Stands der Technik kristallisieren bei hohen Absorbenskonzentrationen ($w_{Absorbens}$ > 80 Massen%) entweder aus oder zeigen eine deutlich kleinere Kältemittelpartialdruckerniedrigung (Faktor < 4,7).

Gemäß der Druckschrift F. Hillerns; Thermophysikalische Eigenschaften und Korrosionsverhalten von Kälteträgern; Die Kälte & Klimatechnik (Okt. 1999) 110-114 führen höhere volumetrische Wärmekapazitäten (Wärmekapazität $c_p$ - Dichte p) zu größeren übertragbaren Wärmemengen und somit zu kompakteren Anlagen sowie zu geringeren Investitionskosten. Die Verringerung der dynamischen Viskosität ($\eta$) bestimmt maßgeblich das Strömungsverhalten und den Druckverlust innerhalb der Wärmeübertrager und Rohrleitungen der Anlage. Je geringer die Viskosität des Fluides ist, desto geringer ist die notwendige Pumpleistung zur Aufrechterhaltung der turbulenten Strömungsform, die für einen effizienten Wärmeübergang in den Wärmeübertragern notwendig ist.

Das erfindungsgemäße Arbeitsmedium enthält mindestens ein Kältemittel. Für die Zwecke der vorliegenden Erfindung besonders geeignete Kältemittel sind solche Stoffe, die in einem Kälte erzeugenden System durch Verdampfen bei niedriger Temperatur und niedrigem Druck Wärme aufnehmen und durch Verflüssigen bei höherer Temperatur und höherem Druck Wärme abgeben. Sie werden in der Norm DIN 8962 vom August 1968 ("Kältemittel") näher spezifiziert.

Das Kältemittel weist günstigerweise eine Verdampfungsenthalpie $\geq$ 300 kJ/kg, besonders bevorzugt $\geq$ 350 kJ/kg, auf.

Die besten Ergebnisse werden mit Wasser, Methanol, Ammoniak, Trifluorethanol, vorzugsweise linearen Kohlenwasserstoffen, insbesondere Ethan und Propan, Alkylaminen, insbesondere Methylamin, Dimethylamin und Ethylamin, und halogenhaltigen Kältemitteln, wie z. B. Difluorethan, Trifluorethan, Tetrafluorethan und Pentafluorethan, erzielt. Dabei haben sich Kältemittel mit einer Wasserlöslichkeit von mindestens 1,0 g, bevorzugt mindestens 5,0 g, besonders bevorzugt mindestens 10,0 g, insbesondere mindestens 20,0 g, jeweils bezogen auf 100,0 g Wasser, gemessen bei 25°C, und vor allen Wasser, Triflurethanol und/oder Ammoniak ganz besonders bewährt.

Im Rahmen einer weiteren besonders bevorzugten Ausführungsform der vorliegenden Erfindung werden Alkane, insbesondere Ethan und/oder Propan als Kältemittel eingesetzt.

Die Kältemittel können jeweils einzeln oder auch als Mischung von zwei oder mehreren der vorstehend genannten Komponenten eingesetzt werden.

Das erfindungsgemäße Arbeitsmedium enthält weiterhin mindestens einen Sorptionsstoff. Sorptionsstoffe sind die nachfolgend näher charakterisierten, unter Normalbedingungen flüssigen organischen Salze oder Salzmischungen.

Unter dem Begriff "flüssige organische Salze" werden organische Salze verstanden, welche bei Normalbedingungen (20 °C, 1.013 mbar), in flüssigem Aggregatzustand vorliegen. Die Definition soll auch Mischungen aus festen Salzen und flüssigen organischen Salzen umfassen, die bei Normalbedingungen, flüssig sind.

Allgemein zeichnen sich flüssige organische Salze durch günstige Eigenschaften insbesondere im Hinblick auf einen potenziellen Einsatz als Lösungsmittel aus und gelten als neue Klasse von Lösungsmitteln und selektiven Hilfsstoffen. Flüssige organische Salze besitzen unter moderaten Bedingungen einen äußerst geringen Dampfdruck bei gleichzeitig relativ geringen Lösungsviskositäten, so dass sie bei Verwendung als Sorptionsstoff in Sorptionskältemaschinen im Austreiber stark aufkonzentriert werden können und geringe oder keine Spuren von flüssigen organischen Salzen im Kältemittel nachzuweisen sind. Zudem stellen flüssige organische Salze durch ihre kombinatorische Velfalt, die sich durch die Variation der Anionen und Kationen ergibt, ein besonders flexibles Sorptionsmittelkonzept dar, das sich auf die zu lösenden technischen Aufgaben durch Wahl geeigneter Kombinationen und Konzentrationen genau anpassen lässt.

Bei Normalbedingungen flüssige organische Salze bestehen in den meisten Fällen aus Anionen wie zum Beispiel Hydroxid, Halogeniden, Carboxylaten, Phosphaten, Thiocyanat, Isothiocyanat, Dicyanamid, Sulfat, Alkylsulfaten, Suffonaten, Alkylsulfonaten, Tetrafluoroborat, Hexafluorophosphat oder auch Bis(trifluormethylsulfonyl)imid kombiniert mit zum Beispiel substituierten Ammonium-, Phosphonium-, Pyridinium- oder Imidazolium-Kationen, wobei die vorgenannten Anionen und Kationen eine kleine Auswahl aus der großen Zahl möglicher Anionen und Kationen darstellen und damit kein Anspruch auf Vollständigkeit erhoben oder gar eine Einschränkung vorgegeben werden soll.

Die als Sorptionsstoff bevorzugt eingesetzten organischen Salze, welche idealerweise bei Normalbedingungen flüssig sind, bestehen aus mindestens einem Kation der allgemeinen Formeln:

$$R^1R^2R^3R^4N^{\oplus} \qquad (1)$$

$$R^1R^2N^{\oplus}{=}CR^3R^4 \qquad (2)$$

$$R^1R^2R^3R^4P^{\oplus} \qquad (3)$$

$$R^1R^2P^{\oplus}{=}CR^3R^4 \qquad (4)$$

in denen

$R^1$, $R^2$, $R^3$, $R^4$ gleich oder unterschiedlich sind und Wasserstoff, einen linearen oder verzweigten gegebenenfalls Doppelbindungen enthaltenden aliphatischen Kohlenwasserstoffrest mit 1 bis 30 Kohlenstoffatomen, einen gegebenenfalls Doppelbindungen enthaltenden cycloaliphatischen Kohlenwasserstoffrest mit 5 bis 40 Kohlenstoffatomen, einen aromatischen Kohlenwasserstoffrest mit 6 bis 40 Kohlenstoffatomen, einen Alkylarylrest mit 7 bis 40 Kohlenstoffatomen, einen durch ein oder mehrere Heteroatome (Sauerstoff, NH, NR' mit R' gleich einem gegebenenfalls Doppelbindungen enthaltenden $C_1$- bis $C_{30}$-Alkylrest, insbesondere $CH_3$) unterbrochenen linearen oder verzweigten gegebenenfalls Doppelbindungen enthaltenden aliphatischen Kohlenwasserstoffrest mit 2 bis 30 Kohlenstoffatomen, einen durch ein oder mehrere Funktionalitäten, ausgewählt aus der Gruppe -O-C(O)-, -(O)C-O-, -NH-C(O)-, -(O)C-NH-, $-(CH_3)N-C(O)-$, $-(O)C-N(CH_3)-$, $-S(O_2)-0-$, $-O-S(O_2)-$, $-S(O_2)-NH-$, $-NH-S(O_2)-$,$-S(O_2)-N(CH_3)-$, $-N(CH_3)-S(O_2)-$, unterbrochenen linearen oder verzweigten gegebenenfalls Doppelbindungen enthaltenden aliphatischen Kohlenwasserstoffrest mit 2 bis 30 Kohlenstoffatomen, einen endständig OH, OR', $NH_2$, N(H)R', $N(R')_2$ (mit R' gleich einem gegebenenfalls Doppelbindungen enthaltenden $C_1$- bis $C_{30}$-Alkylrest) funktionalisierten linearen oder verzweigten gegebenenfalls Doppelbindungen enthaltenden aliphatischen oder cycloaliphatischen Kohlenwasserstoffrest mit 1 bis 30 Kohlenstoffatomen oder einen blockweise oder statistisch aufgebauten Polyether gemäß $-(R^5-O)_n-R^6$ bedeuten,

wobei

$R^5$ ein 2 bis 4 Kohlenstoffatome enthaltender linearer oder verzweigter Kohlenwasserstoffrest,

n 1 bis 100, vorzugsweise 2 bis 60, ist und

$R^6$ Wasserstoff, einen linearen oder verzweigten gegebenenfalls Doppelbindungen enthaltenden aliphatischen Kohlenwasserstoffrest mit 1 bis 30 Kohlenstoffatomen, einen gegebenenfalls Doppelbindungen enthaltenden cycloaliphatischen Kohlenwasserstoffrest mit 5 bis 40 Kohlenstoffatomen, einen aromatischen Kohlenwasserstoffrest mit 6 bis 40 Kohlenstoffatomen, einen Alkylarylrest mit 7 bis 40 Kohlenstoffatomen bedeutet oder ein Rest -C(O)-$R^7$ mit $R^7$ gleich einem linearen oder verzweigten gegebenenfalls Doppelbindungen enthaltenden aliphatischen Kohlenwasserstoffrest mit 1 bis 30 Kohlenstoffatomen, einem gegebenenfalls Doppelbindungen enthaltenden cycloaliphatischen Kohlenwasserstoffrest mit 5 bis 40 Kohlenstoffatomen, einem aromatischen Kohlenwasserstoffrest mit 6 bis 40 Kohlenstoffatomen, einem Alkylarylrest mit 7 bis 40 Kohlenstoffatomen ist.

Als Kationen kommen ferner Ionen in Betracht, die sich von gesättigten oder ungesättigten cyclischen Verbindungen sowie von aromatischen Verbindungen mit jeweils mindestens einem dreibindigen Stickstoffatom in einem 4- bis 10-, vorzugsweise 5- bis 6-gliedrigen heterocyclischen Ring ableiten, der gegebenenfalls substituiert sein kann. Solche Kationen lassen sich vereinfacht (d. h. ohne Angabe von genauer Lage und Zahl der Doppelbindungen im Molekül) durch die nachstehenden allgemeinen Formeln (5), (6) und (7) beschreiben, wobei die heterocyclischen Ringe gegebenenfalls auch mehrere Hetereoatome enthalten können.

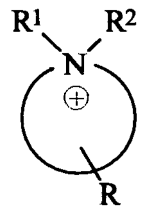 (5) 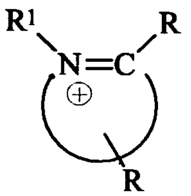 (6) 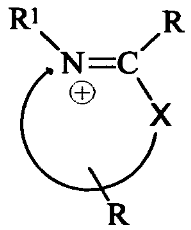 (7)

$R^1$ und $R^2$ besitzen dabei die vorgenannte Bedeutung,

R ist ein Wasserstoff, ein linearer oder verzweigter gegebenenfalls Doppelbindungen enthaltender aliphatischer Kohlenwasserstoffrest mit 1 bis 30 Kohlenstoffatomen, ein cycloaliphatischer gegebenenfalls Doppelbindungen enthaltender Kohlenwasserstoffrest mit 5 bis 40 Kohlenstoffatomen, ein aromatischer Kohlenwasserstoffrest mit 6 bis 40 Kohlenstoffatomen oder einen Alkylarylrest mit 7 bis 40 Kohlenstoffatomen und

X ist ein Sauerstoffatom, ein Schwefelatom oder ein substituiertes Stickstoffatom (X = O, S, NR').

Beispiele für.cyclische Stickstoffverbindungen der vorgenannten Art sind Pyrrolidin, Dihydropyrrol, Pyrrol, Imidazolin, Oxazalonin, Oxazol, Thiazolin, Thiazol, Isoxazol, Isothiazol, Indol, Carbazol, Piperidin, Pyridin, die isomeren Picoline und Lutidine, Chinolin und iso-Chinolin. Die cyclischen Stickstoffverbindungen der allgemeinen Formeln (5), (6) und (7) können unsubstituiert (R = H), einfach oder auch mehrfach durch den Rest R substituiert sein, wobei bei einer Mehrfachsubstitution durch R die einzelnen Reste R unterschiedlich sein können.

Als Kationen kommen weiterhin Ionen in Betracht, die sich von gesättigten acyclischen, gesättigten oder ungesättigten cyclischen Verbindungen sowie von aromatischen Verbindungen mit jeweils mehr als einem dreibindigen Stickstoffatom in einem 4-bis 10-, vorzugsweise 5- bis 6-gliedrigen heterocyclischen Ring ableiten. Diese Verbindungen können sowohl an den Kohlenstoffatomen als auch an den Stickstoffatomen substituiert sein. Sie können ferner durch, gegebenenfalls substituierte, Benzolringe und/oder Cyclohexanringe unter Ausbildung mehrkerniger Strukturen aneliert sein. Beispiele für solche Verbindungen sind Pyrazol, 3,5-dimethylpyrazol, Imidazol, Benzimidazol, N-Methylimidazol, Dihydropyrazol, Pyrazolidin, Pyridazin, Pyrimidin, Pyrazin, Pyridazin, 2,3-, 2,5- und 2,6-Dimethylpyrazin, Cimolin, Phthalazin, Chinazolin, Phenazin und Piperazin. Insbesondere vom Imidazol und seinen Alkyl- und Phenylderivaten abge-leitete Kationen der allgemeinen Formel (8) haben sich als Bestandteil ionischer Flüssigkeit bewährt.

Als Kationen kommen ferner Ionen in Betracht, welche zwei Stickstoffatome enthalten und durch die allgemeine Formel (8) wiedergeben sind

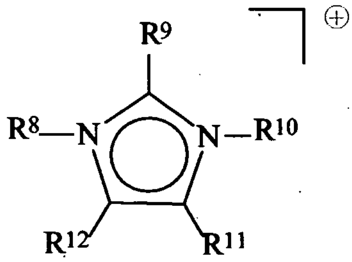

(8)

in denen

$R^8$,$R^9$,$R^{10}$,$R^{11}$,$R^{12}$ gleich oder unterschiedlich sind und Wasserstoff, einen linearen oder verzweigten gegebenenfalls Doppelbindungen enthaltenden aliphatischen Kohlenwasserstoffrest mit 1 bis 30 Kohlenstoffatomen, einen cycloaliphatischen gegebenenfalls Doppelbindungen enthaltenden Kohlenwasserstoffrest mit 5 bis 40 Kohlenstoffatomen, einen aromatischen Kohlenwasserstoffrest mit 6 bis 40 Kohlenstoffatomen, einen Alkylarylrest mit 7 bis 40 Kohlenstoffatomen, einen durch ein oder mehrere Heteroatome (Sauerstoff, NH, NR' mit R' gleich einem gegebenenfalls Doppelbindungen enthaltenden $C_1$- bis $C_{30}$-Alkylrest) unterbrochenen linearen oder verzweigten gegebenenfalls Doppelbindungen enthaltenden aliphatischen Kohlenwasserstoffrest mit 1 bis 30 Kohlenstoffatomen, einen durch ein oder mehrere Funktionalitäten, ausgewählt aus der Gruppe -O-C(O)-, -(O)C-O-, -NH-C(O)-, -(O)C-NH, $-(CH_3)N-C(O)-$, -(O) C-N $(CH_3)$ -, $-S(O_2)-O-$, $-O-S(O_2)-$, $-S(O_2)-NH-$, $-NH-S(O_2)-$, $-S(O_2)-N(CH_3)-$, $-N(CH_3)-S(O_2)-$, unterbrochenen linearen oder verzweigten gegebenenfalls Doppelbindungen enthaltenden aliphatischen Kohlenwasserstoffrest mit 1 bis 30 Kohlenstoffatomen, einen endständig OH, OR', $NH_2$, N(H)R', $N(R')_2$ mit R' gleich einem gegebenenfalls Doppelbindungen enthaltenden $C_1$- bis $C_{30}$-Alkylrest, funktionalisierten linearen oder verzweigten gegebenenfalls Doppelbindungen enthaltenden aliphatischen oder cycloalophatischen Kohlenwasserstoffrest mit 1 bis 30 Kohlenstoffatomen oder einen blockweise oder statistisch aufgebauten Polyether aufgebaut aus $-(R^5-O)_n-R^6$ bedeuten, wobei

$R^5$ ein 2 bis 4 Kohlenstoffatome enthaltender linearer oder verzweigter Kohlenwasserstoffrest,

n 1 bis 100, ist und

$R^6$ Wasserstoff, einen linearen oder verzweigten gegebenenfalls Doppelbindungen enthaltenden aliphatischen Kohlenwasserstoffrest mit 1 bis 30 Kohlenstoffatomen, einen cycloaliphatischen gegebenenfalls Doppelbindungen enthaltenden Kohlenwasserstoffrest mit 5 bis 40 Kohlenstoffatomen, einen aromatischen Kohlenwasserstoffrest mit 6 bis 40 Kohlenstoffatomen, einen Alkylarylrest mit 7 bis 40 Kohlenstoffatomen bedeutet oder ein Rest $-C(O)-R^7$ mit $R^7$ gleich einem linearen oder verzweigten gegebenenfalls Doppelbindungen enthaltenden aliphatischen Kohlenwasserstoffrest mit 1 bis 30 Kohlenstoffatomen, einem gegebenenfalls Doppelbindungen enthaltenden cycloaliphatischen Kohlenwasserstoffrest mit 5 bis 40 Kohlenstoffatomen, einem aromatischen Kohlenwasserstoffrest mit 6 bis 40 Kohlenstoffatomen, einem Alkylarylrest mit 7 bis 40 Kohlenstoffatomen ist.

Die erfindungsgemäß bevorzugt eingesetzten flüssigen organischen Salze bestehen aus mindestens einem der vorgenannten Kationen kombiniert mit mindestens einem der nachstehenden Anionen.

Die Anionen werden erfindungsgemäß ausgewählt aus der Gruppe der Verbindungen Hydroxid (OH-), Dicyanamid, Chlorid, Phosphat, Polyetherphosphate, Alkylsulfonate, Alkylsulfate, Alkylcarboxylate, insbesondere Acetat.

Des Weiteren weisen erfindungsgemäß die als Sorptionsstoff eingesetzten organischen Salze eine Viskosität gemäß DIN 53 019 bei 20 °C in einem Bereich von 1 bis 15.000 mPa.s, vorzugsweise von 2 bis 10.000 mPa.s, besonders bevorzugt in einem Bereich von 5 bis 5.000 mPa.s und darüber hinaus bevorzugt in einem Bereich von 10 bis 3.000 mPa.s auf. Darüber hinaus ist es bevorzugt, dass die organischen Salze bei einer Temperatur von 50 °C flüssig sind und eine Viskosität von weniger als 3.000 mPa.s, besonders bevorzugt von weniger als 2.000 mPa.s und darüber hinaus bevorzugt von weniger als 1.000 mPa.s aufweisen.

Die vorstehend beschriebenen flüssigen organischen Salze können allein oder als Mischung aus mindestens zwei verschiedenen organischen Salzen eingesetzt werden. Weitere erfindungsgemäß bevorzugte flüssige organische Salze sowie Verfahren zu deren Herstellung sind in Angewandte Chemie, 2000, 112, S. 3926-3945 beschrieben. Die Offenbarung dieses Aufsatzes wird hiermit als Referenz eingeführt und gilt als Teil der Offenbarung der vorliegenden Erfindung.

Für die Zwecke der vorliegenden Erfindung besonders bevorzugte Sorptionsmittel umfassen:

Distearyl-dimethylammoniumchlorid,

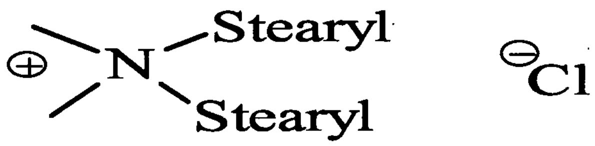

das z. B. unter der Bezeichnung Tego® IL DS von der Degussa AG erhältlich ist,
1-Methyl-2-Nortalgakyl-3-talgamidoethylimidazoliummethylsulfat,

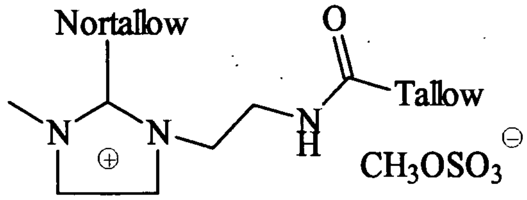

das z. B. unter der Bezeichnung Tego® IL M90 von der Degussa AG erhältlich ist,
1-Ethyl-3-methylimidazolium-ethylsulfat,

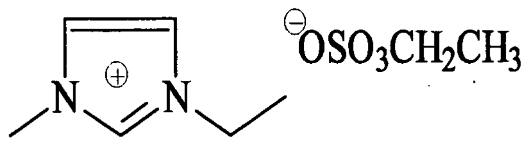

das z. B. unter der Bezeichnung Tego® IL IMES von der Degussa AG erhältlich ist,
ethoxyliertes Cocosdiethanolamoniumchlorid,

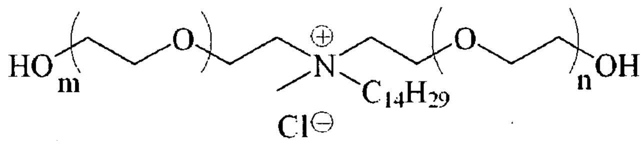

das z. B. unter der Bezeichnung Tego® IL K5 von der Degussa AG erhältlich ist,
ethoxyliertes Kokosamin, quarterniert mit Dimethylsulfat,

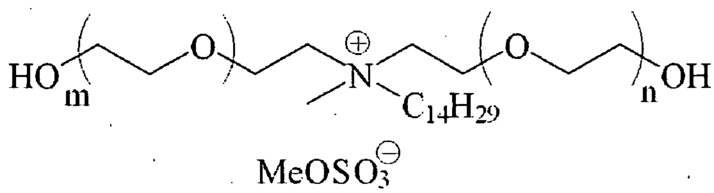

das z. B. unter der Bezeichnung Tego® IL K5MS von der Degussa AG erhältlich ist,
Diethyl-polypropoxy-hydroxyethylammoniumphosphat,

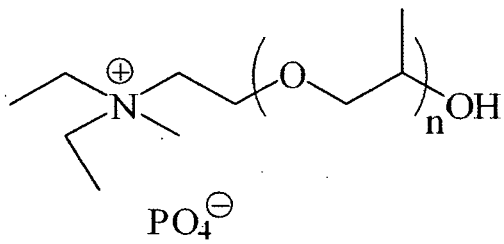

das z. B. unter der Bezeichnung Tego® IL P51P von der Degussa AG erhältlich ist,
Diethyl-polypropoxy-hydroxyethylammoniumacetat,

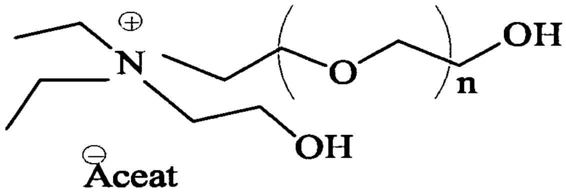

das z. B. unter der Bezeichnung Tego® IL P54A von der Degussa AG erhältlich ist,
Diethyl-polypropoxy-methylammoniumchlorid,

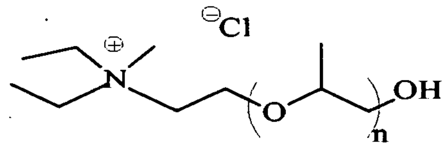

das z. B. unter der Bezeichnung Tego® IL P9 von der Degussa AG erhältlich ist,
ethoxyliertes Talgamin, quarteniert mit Diethylsulfat,

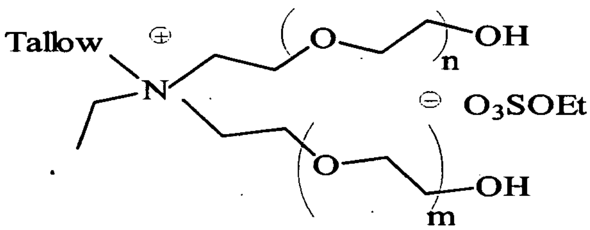

das z. B. unter der Bezeichnung Tego® IL T16ES von der Degussa AG erhältlich ist.

In den obigen Formeln bedeuten m und n jeweils Zahlen im Bereich von 1 bis 300, bevorzugt im Bereich von 1 bis 200, besonders bevorzugt im Bereich von 1 bis 100.

Weitere besonders bevorzugte Sorptionsstoffe umfassen:

Bis(2-hydroxyethyl)-dimethylammoniumchlorid, dessen Synthese in P. Wasserscheid, T. Welton Ionic Liquids in Synthesis Wiley-VCH ISBN 3-527-30515-7 beschrieben wird,
Bis(2-hydroxyethyl)-dimethylammonium-methylsulfonat, dessen Synthese in P. Wasserscheid, T. Welton Ionic Liquids in Synthesis Wiley-VCH ISBN 3-527-30515-7 beschrieben wird,
1-Butyl-3-methylimidazolium-chlorid (CAS#: 79917-90-1), das z. B. unter der Bezeichnung Basionic® ST 70 von der BASF AG erhalten werden kann,
1-Ethyl-3-methylimidazolium-chlorid (CAS#: 65039-09-0),
1-Ethyl-3-methylimidazolium-acetat (CAS#: 143314-17-4),
N-Methylpyrrolinium-acetat, dessen Synthese in P. Wasserscheid, T. Welton Ionic Liquids in Synthesis Wiley-VCH ISBN 3-527-30515-7 beschrieben wird,
N-Methylpyrrolinium-chlorid, dessen Synthese in P. Wasserscheid, T. Welton Ionic Liquids in Synthesis Wiley-VCH ISBN 3-527-30515-7 beschrieben wird,
1-Butyl-4-methylpyridinium-chlorid, dessen Synthese in P. Wasserscheid, T. Welton Ionic Liquids in Synthesis Wiley-VCH ISBN 3-527-30515-7 beschrieben wird,
1,3-Dimethylimidazolium-dimethylphosphat, das z. B. unter der Bezeichnung ECOENG1111P® von der Solvent Innovation GmbH erhalten werden kann,
1-Ethyl-3-methylimidazolium-ethylsulfat (CAS#: 342573-75-5),
1-Ethyl-3-methylimidazolium-methylsulfonat (CAS#: 342789-815),
1-Ethyl-3-methylimidazolium-hydroxid, dessen Synthese aufbauend auf den in P. Wasserscheid, T. Welton Ionic Liquids in Synthesis Wiley-VCH ISBN 3-527-30515-7 beschriebenen Grundlagen durchgeführt werden kann.

Eine weitere Gruppe von besonders zweckmäßigen Sorptionsstoffen umfasst:

1-Butyl-3-methylimidazolium-methansulfonat (CAS#: 342789-81-5),
das z. B. unter der Bezeichnung Basionic® ST 78 von der BASF AG erhalten werden kann,
Methyl-tri-n-butylammoniummethylsulfat (CAS#: 13106-24-6), das z. B. unter der Bezeichnung Basionic® ST 62 von der BASF AG erhalten werden kann,
1,2,4-Trimethylpyrazoliummethylsulfat, das z. B. unter der Bezeichnung Basionic® ST 33 von der BASF AG erhalten werden kann,
1-Ethyl-2,3-di-methylimidazoliumethylsulfat (CAS#: 516474-08-01), das z. B. unter der Bezeichnung Basionic® ST 67 von der BASF AG erhalten werden kann,
1,2,3-Trimethyl-imidazoliummethylsulfat (CAS#: 65086-12-6), das z. B. unter der Bezeichnung Basionic® ST 99 von der BASF AG erhalten werden kann,
Methylimidazoliumchlorid (CAS#: 35487-17-3), das z. B. unter der Bezeichnung Basionic® AC 75 von der BASF AG erhalten werden kann,
Methylimidazoliumhydrogensulfat (CAS#: 681281-87-8), das z. B. unter der Bezeichnung Basionic® AC 39 von der BASF AG erhalten werden kann,
1-Ethyl-3-methylimidazoliumhydrogensulfat (CAS#: 412009-61-1), das z. B. unter der Bezeichnung Basionic® AC 25 von der BASF AG erhalten werden kann,
1-Butyl-3-methylimidazolium-hydrogensulfat (CAS#: 80432-05-9), das z. B. unter der Bezeichnung Basionic® AC 28 von der BASF AG erhalten werden kann,

1-Ethyl-3-methylimidazolium-thiocyanat (CAS#: 331717-63-6), das z. B. unter der Bezeichnung Basionic® ST VS 01 von der BASF AG erhalten werden kann,
1-Butyl-3-methylimidazolium-thiocyanat (CAS#: 344790-87-0), das z. B. unter der Bezeichnung Basionic® ST VS 02 von der BASF AG erhalten werden kann,
Cholinacetat (CAS#: 14586-35-7), das z. B. unter der Bezeichnung Basionic® FS 85 von der BASF AG erhalten werden kann,
Cholinsalicylat (CAS#: 2016-36-6), das z. B. unter der Bezeichnung Basionic® FS 65 von der BASF AG erhalten werden kann,
Tris-(2-hydroxyethyl)-methylammoniummethylsulfat (CAS#: 29463-06-7), das z. B. unter der Bezeichnung Basionic® FS 01 von der BASF AG erhalten werden kann.

Darüber hinaus ist auch die Verwendung der folgenden Sorptionsstoffe besonders günstig:

1-Ethyl-3-methylimidazoliumdicyanamid,
N-Ethyl-N-methylpyrrolidiniumdicyanamid,
N-Propyl-N-methylpyrrolidiniumdicyanamid,
N-Butyl-N-methylpyrrolidiniumdicyanamid,
N-Hexyl-N-methylpyrrolidiniumdicyanamid,
N-Pentyl-N,N,N-triethylammoniumdicyanamid,
N-Hexyl-N,N,N-triethylammoniumdicyanamid,
N-Hexyl-N,N,N-tributylammoniumdicyanamid,
1-Methyl-3-methylimidazoliumlaktat,
1-Ethyl-3-methylimidazoliumlaktat,
1-Propyl-3-methylimidazoliumlaktat,
1-Butyl-3-methylimidazoliumlaktat,
1-Butoxy-3-methylimidazoliumlaktat.

Die Synthese der obigen Dicyanamide wird in der Druckschrift D. R. MacFarlane et al.; Ionic liquids based on imidazolium, ammonium and pyrrolidinium salts of the dicyanamide anion; Green Chemistry 4 (2002) 444-448 beschrieben. Für die Synthese der obigen Laktate wird auf die Druckschrift J. Pernak, I. Gok; New Ionic Liquids with Organic Anions; Polish J. Chem. 77 (2003) 975-984 verwiesen.
Noch eine Gruppe bevorzugter ionischer Flüssigkeiten umfasst:

T-Ethyl-3-methyl-imidazoliumnitrat,
1-Ethyl-3-methyl-imidazoliumtosylat,
1-Ethyl-3-methyl-imidazoliumbromid,
1-Allyl-3-methylimidazoliumchlorid,

1-Methyl-3-propyl-imidazoliumiodid,
1-Butyl-1-methyl-pyrrolidiniumdicyanamid und
Tributylmethylphosphoniummethylsulfat (CYPHOS®), die z. B. von der Firma Ionic Liquids Technologies erhältlich sind.

Wertvolle Hinweise zur Herstellung der der vorstehenden ionischen Flüssigkeiten können insbesondere der Druckschrift P. Wasserscheid, T. Welton Ionic Liquids in Synthesis Wiley-VCH, ISBN 3-527-30515-7 entnommen werden.

Die erfindungsgemäß verwendete ionische Flüssigkeit oder Mischung ionischer Flüssigkeiten zeichnet sich durch eine thermische Stabilität größer 150°C aus. Die Bestimmung der thermischen Stabilität kann auf an sich bekannte Weise erfolgen. Besonders bewährt hat sich jedoch die Thermogravimetrie, wobei vorzugsweise wie in N. Bicak *A new ionic liquid: 2-hydroxy ethylammonium formiate* beschrieben vorgegangen und mit einer Shimadzu TG-50 und einer Heizrate von 10°C/min unter Stickstoffatmosphäre (Stickstofffluß: 23 ml/min) gemessen wird. Unter diesem Bedingungen zeigen thermostabilie ionische Flüssigkeiten bevorzugt eine Gewichtsabnahme kleiner 50 %, besonders bevorzugt kleiner 30 %, zweckmäßigerweise kleiner 20 %, noch mehr bevorzugt kleiner 10 % und insbesondere kleiner 5 %, jeweils bezogen auf das Ausgangsgewicht.

Das erfindungsgemäße Arbeitsmedium besitzt eine vergleichsweise hohe Lagerstabilität. Nach Lagerung bei 70°C für 8000 h beträgt der Abbau des Arbeitsmediums vorzugsweise maximal 5 %, bevorzugt maximal 4 %, besonders bevorzugt maximal 3 %, jeweils bezogen auf die Ausgangszusammensetzung, d. h. vorzugsweise sind mindestens 95 %, bevorzugt mindestens 96 %, besonders bevorzugt mindestens 97 % der Bestandteile chemisch identisch.

Die Prüfung hinsichtlich der chemischen Identität kann anhand üblicher Verfahren erfolgen. Infrarotspektroskopie-, NMR- und Massenspektroskopie-Untersuchungen haben sich in diesem Zusammenhang ganz besonders bewährt.

Die Lagerung des Arbeitsmediums wird bevorzugt unter für die Anwendung üblichen Bedingungen, besonders bevorzugt unter Luft- und Feuchtigkeits-freien Bedingungen durchgeführt.

Das erfindungsgemäße Arbeitsmedium ist aus gesundheitlichen Gesichtspunkten vergleichsweise unbedenklich. Bevorzugt hat es einen $LD_{50}$-Wert größer 1000 mg/kg, besonders bevorzugt größer 1500 mg/kg, insbesondere größer 2000 mg/kg, und/oder einen $EC_{50}$-Wert größer 50 mg/l, besonders bevorzugt, größer 75 mg/l, insbesondere größer 100 mg/l. Zweckmäßigerweise sind beide Kriterien gleichzeitig erfüllt.

Weiterhin ist das erfindungsgemäße Arbeitsmedium deutlich weniger korrosiv als die bisher aus dem Stand der Technik bekannten Arbeitsmedien. Es zeichnet sich zweckmäßigerweise dadurch aus, dass es beim Glassware-Korrosionstest gemäß ASTM D1384 einen maximalen Abtrag von 5 $g/m^2$, bevorzugt von maximal 3 $g/m^2$, besonders bevorzugt von maximal 2 $g/m^2$, zeigt.

Bei diesem Test werden exakt gewogene, mit einer Bohrung versehene Metallplättchen, vorzugsweise aus Kupfer, Weichlot, Messing, Stahl, Grauguß oder Guß-Aluminium, in einem Gestell auf einem isolierten Stab hintereinander angeordnet. Kupfer, Weichlot und Messing werden durch Messing-Distanzstücke, Stahl, Grauguß und Guß-Aluminium durch Stahl-Distanzstücke jeweils leitend verbunden, die entstehenden "Pakete" jedoch voneinander isoliert. Der Prüfkörper wird in das Medium gebracht und der Ansatz zur Steigerung der Korrosionsgeschwindigkeit 14 Tage lang unter Einleitung von Luft auf 88°C erhitzt. Anschließend werden die Kupons gereinigt, erneut gewogen und der Abtrag ermittelt.

Im Rahmen einer ersten besonders bevorzugten Variante der vorliegenden Erfindung wird die Abtragsmessung unter Verwendung von Weichlot-Plättchen durchgeführt. Im Rahmen einer zweiten besonders bevorzugten Variante der vorliegenden Erfindung wird die Abtragsmessung unter Verwendung von Guß-Aluminium-Plättchen durchgeführt.

Das erfindungsgemäße Arbeitsmedium weist darüber hinaus ein deutlich verbessertes Absorptionsvermögen auf. Insbesondere wird durch organische Salze oder Salzmischungen der Dampfpartialdruck des Kältemittels wesentlich verringert, wobei die Abnahme des Partialdrucks des Kältemittels, gemessen bei 30°C für eine Zusammensetzung, bestehend aus 90 Massen-% organisches Salz oder Salzmischung und 10 Massen-% Kältemittel, gegenüber dem Dampfdruck des Kältemittels bei 30°C vorzugsweise mindestens den Faktor 1,5, zweckmäßigerweise mindestens den Faktor 3, bevorzugt mindestens den Faktor 4, besonders bevorzugt mindestens den Faktor 5, noch mehr bevorzugt mindestens den Faktor 6 und insbesondere mindestens den Faktor 7 ausmacht.

Die Herstellung des erfindungsgemäßen Arbeitsmediums kann auf an sich bekannte Weise durch Mischen der Komponenten erfolgen.

Mögliche Anwendungsgebiete des erfindungsgemäßen Arbeitsmediums sind dem Fachmann unmittelbar offensichtlich. Es eignet sich prinzipiell für alle Kälteprozesse und/oder Kältemaschinen und wird bevorzugt in Absorptionswärmepumpen, Absorptionskältemaschinen, Dampfstrahlkältemaschinen, Wärmepumpen, Wärmetransformatoren oder Kompressionskältemaschinen verwendet. Besonders geeignete Anwendungsgebiete schließen Lüftungs- oder Klimatechnik, wie beispielsweise die Gebäudetechnik, die Fahrzeugtechnik, die Schiffstechnik, die Luft- und Raumfahrt und die Containertechnik, Kühlhäuser oder Kühltransporter, wie Kühlschiffe oder Kühllastkraftwagen, zum Transport von Lebensmitteln, Gasen, Chemikalien und/oder Tieren sowie die Verfahrenstechnik zur Lufttrocknung, vorzugsweise

nach dem Kondensationsprinzip, zur Absorption von Gasen, zentrale oder mobile Anlagen zur Wärmerückgewinnung, wie Heizkraftwerke oder solar betriebene Anlagen, Kühlschränke, Gefrierschränke und Klimaanlagen ein.

Zweckmäßigerweise durchläuft mindestens eine Komponente des Arbeitsmediums unter Zu- oder Abfuhr von Wärme oder mechanischer Energie einen Kreisprozess.

Weiterhin fungiert die ionische Flüssigkeit günstigerweise als Sorptionsstoff für die Absorption mindestens eines dampf- oder gasförmigen Kältemittels.

Die Trennung des Kältemittels und des Sorptionsmittels erfolgt bevorzugt in einem Austreiber und anschließender Kondensation des Kältemittels in einem Kühler mit Rücklauf. Der Austreiber und Rücklaufkühler einer Absorptionskälteanlage können jedoch gemäß einer alternativen besonders bevorzugten Ausführungsform durch mindestens einen Apparat ersetzt werden, in dem sich eine Flüssig-Flüssig-Phasentrennung vollzieht und die beiden flüssigen Phasen getrennt abgezogen werden. Dabei werden günstigerweise eine Absorbens-haltige Flüssigphase mit einer Absorbenskonzentration von mindestens 20 Gew.-% und eine Kältemittel-haltige Flüssigphase mit einer Kältemittelkonzentration von mindesten 20 Gew.-% ausgebildet (s. Fig. 1).

Die vorliegende Erfindung betrifft weiterhin Kältemaschinen, insbesondere Absorptionswärmepumpen, Absorptionskältemaschinen, Dampfstrahlkältemaschinen, Wärmepumpen, Wärmetransformatoren oder Kompressionskältemaschinen, die einen Verflüssiger, ein Expansionsorgan, einen Wärmeüberträger und/oder einen Absorber und das erfindungsgemäße Arbeitsmedium enthalten. Die Kältemaschinen, insbesondere Absorptionswärmepumpen, Absorptionskältemaschinen, Dampfstrahlkältemaschinen oder Kompressionskältemaschinen umfassen dabei vorzugsweise einen Mixer-Settler zur Flüssig-Flüssig-Trennung des Arbeitsmediums.

Nachfolgend wird die Erfindung durch mehrere Beispiele veranschaulicht. Insbesondere wird anhand von experimentell ermittelten Gleichgewichtswerten bzw. Absorptionsisothermen exemplarisch das verbesserte Eigenschaftsprofil der erfindungsgemäßen Sorptionsstoffe und Additive belegt und mit dem Stand der Technik verglichen.

Absorptionsisothermen ergeben sich aus der Menge von einer flüchtigen Komponente (hier das Kältemittel), die sich bei einer vorgegebenen Temperatur und bei Drücken, die in der Regel kleiner als der Reinstoffdampfdruck des Kältemittels sind, in einer sehr hochsiedenden oder nicht-flüchtigen Flüssigkeit (hier das Sorptionsmittel) in einem Gleichgewichtszustand löst. Somit stellen die Wertepaare aus Konzentration des flüssigen, binären Gemisches und dem Druck der flüchtigen Komponente über der Flüssigkeit bei gegebener Temperatur eine Absorptionsisotherme dar. Solche Absorptionsisothermen von hochsiedenden oder nicht-flüchtigen flüssigen Substanzen können mit Hilfe von verschiedenen dynamischen oder statischen experimentellen Methoden vermessen werden, von denen hier beispielhaft auf eine dynamische, gravimetrische Methode verwiesen wird, wie sie von Sadowski G., Mokrushina L. V., Arlt, W., "Finite and infinite dilution activity coefficients in polycarbonate systems", Fluid Phase Equilibria, 139 (1997) 391-493 vorgestellt wurde. In den hier betrachteten Absorptionskältemaschinen soll ein Sorptionsstoff das Kältemittel nach dessen Entspannung und Verdampfung bei einem niedrigen Druck absorbieren. Ein vorteilhafter Sorptionsstoff nimmt bei gegebenem Druck möglichst viel Kältemittel auf, woraufhin sich das Volumen und die Massen der Kreislaufströme minimieren (bzw. niedrigerer Druck bei gleicher Zusammensetzung). Dies führt dazu, dass die Anlage einen größeren Wirkungsgrad erzielt und von ihren Dimensionen sowie der Einsatzmenge an Absorber vorteilhafter ausfallen kann.

Als Maß für die Aufnahmefähigkeit eines Sorptionsstoffes kann alternativ zur Absorptionsiosotherme auch die Henry-Konstante herangezogen werden. Diese ist umso kleiner, je größer die Gaslöslichkeit im betrachteten Sorptionsstoff ist. Daher ist eine kleine Henry-Konstante anzustreben. Zur Ermittlung der Henry-Konstante müssen ebenfalls experimentelle Phasengleichgewichtsdaten für das jeweilige Gas-/Absorbenssystem herangezogen werden.

Die Henry-Konstante $H_{1,2}$ des gelösten Stoffes 1 im Sorptionsstoff 2 ergibt sich aus der Steigung der Fugazität für einen gegen Null gehenden Molanteil der Komponente 1, d.h. vereinfacht am Sättigungsdampfdruck des Sorptionsstoffs 2 (Gmehling J., Kolbe B., "Thermodynamik", ISBN 3-527-28547-4, Kapitel 4). Die verschiedenen experimentellen Methoden zur Bestimmung der Henry-Konstante sind in Prausnitz J. M., Lichtenthaler R. N., de Azevedo E. G., "Molecular Thermodynamics of Fluid-Phase Equilibria", ISBN 0-13-977745-8; Gmehling J., Kolbe B., "Thermodynamik", ISBN 3-527-28547-4 und Stephan K., Mayinger F., "Thermodynamik", Band. 2 Mehrstoffsysteme und chemische Reaktionen, ISBN 3-540-54459-3, beschrieben.

Abkürzungsverzeichnis der verwendeten Sorptionsstoffe:

| | |
|---|---|
| EMIM Cl | 1-Ethyl-3-methylimidazolium-chlorid |
| EMIM OAc | 1-Ethyl-3-methylimidazolium-acetat |
| MP OAc | N-Methylpyrrolinium-acetat |
| MP Cl | N-Methylpyrrolinium-chlorid |
| MBP Cl | 1-Butyl-4-methylpyridinium-chlorid |
| Salz A | Bis(2-hydroxyethyl)-dimethylammoniumchlorid |

(fortgesetzt)

| | |
|---|---|
| Salz B | Bis(2-hydroxyethyl)-dimethylammonium-methylsulfonat |
| BMIM $BF_4$ | 1-Butyl-3-methylimidazolium-tetrafluoroborat |
| BMIM Br | 1-Butyl-3-methylimidazolium-bromid |
| MMIM $MMPO_4$ | 1,3-Dimethylimidazolium-dimethylphosphat, EeOENG1111P™ |
| EMIM $EtSO_4$ | 1-Ethyl-3-methylimidazolium-ethylsulfat |
| EMIM $MeSO_3$ | 1-Ethyl-3-methylimidazolium-methylsulfonat |
| EMIM OH | 1-Ethyl-3-methylimidazolium-hydroxid |

Beispielsystem I:

2,2,2-Trifluoroethanol als Kältemittel

Gemäß des Standes der Technik sind allein die flüssigen organischen Salze 1-Butyl-3-Methyl-Imidazolium Tetrafluoroborat und 1-Butyl-3-Methyl-Imidazolium Bromid als Sorptionsstoffe für 2,2,2-Trifluoroethanol geeignet. Hierbei wird von Kim, K.S. et al. in "Ionic Liquids as new working fluids for use in absorption heat pumps or chillers" (fifteenth symposium on thermophysical properties, Boulder, CO, USA, June 22-27, 2003) die gegenüber dem 1-Butyl-3-Methyl-Imidazolium Tetrafluoroborat überlegene Absorptionsfähigkeit des 1-Butyl-3-Methyl-Imidazolium Bromid dargelegt.

Die nachfolgende Tabelle I zeigt den Partialdruck des Kältemittels Trifluorethanol bei dem jeweiligen Massenanteil der ionischen Flüssigkeit. Die Messungen wurden bei 70°C durchgeführt.

Tabelle I:

| Massenanteil der ionischen Flüssigkeit | 0.80 | 0.60 | 0.40 | 0.20 |
|---|---|---|---|---|
| BMIM $BF_4$ | 18.0 | 35.9 | 53.0 | 70.2 |
| BMIM Br | 1.6 | 5.6 | 15.1 | 42.2 |
| EMIM OH | < 0.1 | < 0.1 | < 0.1 | 5.0 |
| EMIM C1 | 0.2 | 1.0 | 4.0 | 19.3 |
| EMIM OAc | 0.2 | 0.8 | 3.7 | 24.7 |
| MBP Cl | 0.3 | 1.3 | 5.0 | 25.2 |
| Salz A | 0.7 | 3.6 | 11.1 | 33.0 |
| Salz B | 1.6 | | | 42.0 |
| MMIM $MMPO_4$ | 0.8 | 3.2 | 10.7 | 39.7 |
| EMIM $MeSO_3$ | 1.2 | 4.6 | 13.5 | 39.7 |

Partialdruck [kPa] von 2,2,2-Trifluoroethanol für verschiedene Sorptionsstoffe

Überraschenderweise zeigen die untersuchten organischen Salze (s. Tabelle I), dass gegenüber dem Stand der Technik durch die Verwendung von 1-Ethyl-3-Methylimidazolium-hydroxid, 1-Ethyl-3-Methylimidazolium Methylsulfonat (EMIM $MeSO_3$), Bis(2-hydroxy-ethyl)-dimethylammoiniumchlorid, 4-Methyl-N-butylpyridinium Chlorid (MBP Cl), 1-Ethyl-3-Methylimidazolium Acetat (EMIM OAc) und 1-Ethyl-3-Methylimidazolium Chlorid (EMIM Cl) ein erheblich verbessertes Absorptionsvermögen nachgewiesen wurde.

Das gemäß des bekannten Standes der Technik vorteilhafte 1-Butyl-3-Methyl-Imidazolium Bromid (BMIM Br) besitzt einen Schmelzpunkt von 82 °C. Durch die Verwendung der von der Absorptionsfähigkeit überlegenen flüssigen organischen Salze wie z.B. 1-Ethyl-3-methylimidazolium-methylsulfonat und 1-Ethyl-3-methylimidazolium-acetat kann darüber hinaus noch der Reinstoffschmelzpunkt des Sorptionsmittels um einen Betrag von 47 K bis über 100 K abgesenkt werden. Mit diesen erfindungsgemäßen, vorzugsweise flüssigen organischen Salzen kann der Sorptionsstoff im Austreiber nun stärker aufkonzentriert werden, ohne dass eine Kristallisation des Sorptionsstoffes befürchtet werden muss. Reste an Kältemittel zur Vermeidung von Kristallisation sind - je nach Temperatur im Sorptionsstoff - gar nicht notwendig

oder können wesentlich geringer ausfallen als im Stand der Technik. Hierdurch werden nutzlose Kreislaufströme minimiert und die Effizienz erhöht.

Beispielsystem II:

R134a als Kältemittel

Die nachfolgende Tabelle II zeigt den Partialdruck des Kältemittels R134a bei dem jeweiligen Massenanteil des Sorptionsstoffs. Die Messungen wurden bei 20°C durchgeführt.

Tabelle II:

| Massenanteil des Sorptionsstoffs | 0.80 | 0.60 | 0.40 | 0.20 |
|---|---|---|---|---|
| N,N-Dimethylformamid | 35 | 97 | 205 | 350 |
| N,N-Dimethylacetamid | 20 | 64 | 166 | 364 |
| EMIM $EtSO_4$ | | | | 360 |
| EMIM OH | 3 | 20 | 112 | 345 |
| EMIM Cl | 7 | 37 | 135 | 327 |
| EMIM OAc | 17 | 66 | 175 | 360 |
| MP OAc | 15 | 74 | 197 | 373 |
| MP Cl | 2 | 23 | 132 | 339 |
| MMIM $MMPO_4$ | 57 | 164 | 303 | 439 |

Partialdruck [kPa] von R134a für verschiedene Sorptionsstoffe

Gemäß des Standes der Technik gilt für das Kältemittel R134a das N,N-Dimethylformamid als ein sehr vorteilhafter Sorptionsstoff. In den in Tabelle II präsentierten, experimentell ermittelten Absorptionsisothermen wird durch die ausgewählten organischen Salze 1-Ethyl-2,3-dimethylimidazolium-acetat (EMMIM OAc) und 1-Ethyl-2,3-dimethylimidazolium-chlorid (EMMIM Cl) ein erheblich größeres Absorptionsvermögen realisiert. Darüber hinaus besitzt gemäß Yokozeki, A.; Applied Energy 80 (2005); 383-399 der vorteilhafte konventionelle Sorptionsstoff N,N-Dimethylformamid eine messbare Flüchtigkeit, die die Installation von zusätzlichen Trennapparaturen hinter dem Austreiber zur Abtrennung von Sorptionsstoffresten aus dem Kältemittel erfordern kann. Neben der größeren Absorptionsfähigkeit ist ein weiterer Vorteil der erfindungsgemäßen flüssigen organischen Salze, dass bei deren Verwendung als Sorptionsstoff aufgrund ihrer nicht messbar geringen Flüchtigkeit keine derartigen Einbauten benötigt werden.

Beispielsystem III:

Ammoniak ($NH_3$) als Kältemittel

Für Ammoniak als Kältemittel stellt Wasser gemäß des Standes der Technik den derzeit vorteilhaftesten Sorptionsstoff dar. Die im Gefrierpunkt von Wasser begründete Beschränkung der Arbeitstemperatur des Absorbers auf 0 °C kann durch die Verwendung der erfindungsgemäßen flüssigen organischen Salze um mehr als 20 K abgesenkt werden. Eine solche Temperaturabsenkung ist bei mehrstufigen Tiefkälteanlagen (die aufgrund der Dampfdruckkurve und des Schmelzpunktes von Ammoniak mit diesem Kältemittel gut realisiert werden können) besonders vorteilhaft, da eine geringere Absorbertemperatur über die Absenkung des Kältemitteldampfdruckes immer zu einem verbesserten Absorptionsverhalten führt.

Beispielsystem IV:

Wasser als Kältemittel

Gemäß des Standes der Technik ist für das Kältemittel Wasser das Lithiumbromid der vorteilhafteste Sorptionsstoff. Lithiumbromid hat einen Reinstoffschmelzpunkt von 550 °C, woraufhin im Austreiber eine Aufkonzentrierung dieses Sorptionsstoffes - je nach Temperatur - bis maximal 30 bzw. 40 Massenprozent Restwasseranteil erfolgen kann.

Unterschreitet man diese Grenze, so kristallisiert das Lithiumbromid wenigstens teilweise aus und der kontinuierliche Prozess kommt zum Erliegen.

Durch die Verwendung der erfindungsgemäßen Sorptionsstoffe wie beispielsweise 1-Ethyl-3-methylimidazolium-methylsulfonat oder 1-Ethyl-3-methylimidazolium-acetat und 1-Ethyl-3-methylimidazolium-hydroxid ergeben sich die bereits genannten Vorteile einer erheblich höheren Aufkonzentrierung des Sorptionsstoffes im Austreiber.

Beispielsystem VII:

Flüssige organische Salze als Additiv für Arbeitsmedien

VII a)

Additiv für das Arbeitsmedium Lithiumbromid-Wasser

Durch die Verwendung der erfindungsgemäßen Additive 1-Ethyl-3-methylimidazolium-methylsulfonat, 1-Ethyl-3-methylimidazolium-acetat, 1-Ethyl-3-methylimidazolium-hydroxid innerhalb der Grenzen der homogenen Mischbarkeit kann die Kristallisationstemperatur des Sorptionsstoffes herabgesetzt werden. Hierdurch ist eine höhere Konzentrierung des Sorptionsstoffes im Austreiber möglich und es ergeben sich die zuvor dargestellten Vorteile gegenüber dem Stand der Technik.

Beispiel VIII:

Die ionische Flüssigkeit Bis(2-hydroxyethyl)dimethylammoniummethylsulfonat ($C_7H_{19}NO_5S$) wird von mehreren Firmen hergestellt. Hinweise zur Synthese können der Druckschrift P. Wasserscheid, T. Welton Ionic Liquids in Synthesis Wiley-VCH, ISBN 3-527-30515-7 entnommen werden.

Misst man, wie in

- W. Pennington; How to find accurate vapor pressures of lithium bromide water solutions; Refrig. Eng. 63 (May 1955) 57-61 oder
- D.A. Boryta, A.J. Maas, C.B. Grant; Vapor pressuretemperature-concentration relationship for system lithiumbromide and water (40-70% lithiumbromide); J. Chem. Eng. Data 20 (1975) 316-319 oder
- S. Iyoki, T. Uemura; Vapor pressure of the water-lithium bormide system and water-lithium bromide-zinc bromidelithium chloride system at high temperatures; Int. J. Refrigeration 12 (1989) 278-282

beschrieben, das Absorptionsverhalten der ionischen Flüssigkeit in Wasser bei 20 °C, so ergibt sich bei einer Lösung bestehend aus 80 Massen% Bis(2-hydroxyethyl)dimethylammonium-methylsulfonat und 20 Massen% Wasser ein Wasserpartialdruck von 14 mbar. Bei 40°C beträgt der Wasserpartialdruck in einem System bestehend aus 92 Massen% Bis(2-hydroxyethyl)dimethylammoniummethylsulfonat und 8 Massen% Wasser ca. 13,9 mbar, so dass die Verwendung der erfindungsgemäßen ionischen Flüssigkeit aufgrund ihres guten Absorptionsvermögens überraschenderweise zu einer Druckerniedriegung um den Faktor 5,3 gegenüber dem Dampfdruck von reinem Wasser bei 40 °C führt. Im Stand der Technik ist die Verwendung von LiBr als Absorbens und Wasser als Kältemittel sehr weit verbreitet. Nachteile des Stands der Technik sind

- die Kristallisation von LiBr in Wasser bei LiBr-Konzentrationen oberhalb 60 Massen% LiBr (je nach Systemtemperatur),
- die stark korrosive Wirkung von LiBr, was die Verwendung teurer korrosionsresistenter Materialien z.B. in einer Absorptionskältemaschine erfordert oder häufig mit Umweltbelastungen verbunden ist.

Die erfindungsgemäße ionische Flüssigkeit Bis(2-hydroxyethyl)dimethylammonium-methylsulfonat beseitigt diese Nachteile des Stands der Technik. Neben ihrem sehr guten Absorptionsvermögen für Wasser kristallisiert diese ionische Flüssigkeit bei $T \geq 20$ °C auch bei Konzentrationen größer 65 Massen% ionischer Flüssigkeit in Wasser nicht aus. Der Arbeitsbereich von Kälteprozessen wie z.B. Absorptionskältemaschinen ist somit bei Verwendung dieser ionischen Flüssigkeit deutlich größer, wodurch leistungsfähigere Absorptionskältemaschinen (gleicher Größe) oder kleinere Absorptionskältemaschinen (gleicher Leistung) gebaut werden können. Diese erfindungsgemäße ionische Flüssigkeit zeigt darüber hinaus eine deutlich geringere Korrosivität als LiBr und erlaubt somit auch die Verwendung preiswerterer

Materialien in Kälteprozessen wie Absorptionskältemaschinen. Negative Umwelteinflüsse des LiBr werden ebenfalls durch diese erfindungsgemäße ionische Flüssigkeit deutlich reduziert.

Beispiel IX:

Die ionische Flüssigkeit 1-Ethyl-3-methylimidazolium-ethylsulfat ($C_8H_{16}N_2O_4S$, auch EMIM ES genannt) kann bei Degussa AG unter dem Namen TEGO IL IM ES bezogen werden ($LD_{50}$ > 2000 mg/kg, $EC_{50}$ > 100 mg/dm$^3$). Misst man, wie in

- W. Pennington; How to find accurate vapor pressures of lithium bromide water solutions; Refrig. Eng. 63 (May 1955) 57-61 oder
- D.A. Boryta, A.J. Maas, C.B. Grant; Vapor pressuretemperature-concentration relationship for system lithiumbromide and water (40-70% lithiumbromide); J. Chem. Eng. Data 20 (1975) 316-319 oder
- S. Iyoki, T. Uemura; Vapor pressure of the water-lithium bormide system and water-lithium bromide-zinc bromidelithium chloride system at high temperatures; Int. J. Refrigeration 12 (1989) 278-282

beschrieben, das Absorptionsverhalten der ionischen Flüssigkeit TEGO IL IM ES in Wasser bei 20 °C, so ergibt sich bei einer Lösung bestehend aus 80 Massen% TEGO IL IM ES und 20 Massen% Wasser ein Wasserpartialdruck von 15 mbar.

Der Dampfdruck von reinem Wasser bei 20°C beträgt 23,37 mbar und wurde somit durch die Anwesenheit von TEGO IL IM ES um den Faktor 1,56 abgesenkt. Im Stand der Technik ist die Verwendung von LiBr als Absorbens und Wasser als Kältemittel sehr weit verbreitet. Nachteile des Stands der Technik sind

- die Kristallisation von LiBr in Wasser bei LiBr-Konzentrationen oberhalb 60 Massen% LiBr (je nach Systemtemperatur),
- die stark korrosive Wirkung von LiBr, was die Verwendung teurer korrosionsresistenter Materialien z.B. in einer Absorptionskältemaschine erfordert oder häufig mit Umweltbelastungen verbunden ist.

Die erfindungsgemäße ionische Flüssigkeit TEGO IL IM ES beseitigt diese Nachteile des Stands der Technik. Neben ihrem sehr guten Absorptionsvermögen für Wasser kristallisiert diese ionische Flüssigkeit bei $T \geq 20$ °C auch bei Konzentrationen größer 65 Massen% ionischer Flüssigkeit in Wasser nicht aus. Der Arbeitsbereich von Kälteprozessen wie z.B. Absorptionskältemaschinen ist somit bei Verwendung dieser ionischen Flüssigkeit deutlich größer, wodurch leistungsfähigere Absorptionskältemaschinen (gleicher Größe) oder kleinere Absorptionskältemaschinen (gleicher Leistung) gebaut werden können. Diese erfindungsgemäße ionische Flüssigkeit zeigt darüber hinaus eine deutlich geringere Korrosivität als LiBr und erlaubt somit auch die Verwendung preiswerterer Materialien in Kälteprozessen wie Absorptionskältemaschinen. Negative Umwelteinflüsse des LiBr werden ebenfalls durch diese erfindungsgemäße ionische Flüssigkeit deutlich reduziert.

Beispiel X:

Das ethoxiliertes Cocosdiethanolamoniumchlorid ist eine ionische Flüssigkeit, die bei Degussa AG unter dem Namen TEGO IL K5 bezogen werden kann. Misst man, wie in

- W. Pennington; How to find accurate vapor pressures of lithium bromide water solutions; Refrig. Eng. 63 (May 1955) 57-61 oder
- D.A. Boryta, A.J. Maas, C.B. Grant; Vapor pressuretemperature-concentration relationship for system lithiumbromide and water (40-70% lithiumbromide); J. Chem. Eng. Data 20 (1975) 316-319 oder
- S. Iyoki, T. Uemura; Vapor pressure of the water-lithium bormide system and water-lithium bromide-zinc bromidelithium chloride system at high temperatures; Int. J. Refrigeration 12 (1989) 278-282

beschrieben, das Absorptionsverhalten der ionischen Flüssigkeit TEGO IL K5 in Wasser bei 20 °C, so ergibt sich bei einer Lösung bestehend aus 80 Massen% TEGO IL K5 und 20 Massen% Wasser ein Wasserpartialdruck von 17 mbar.

Der Dampfdruck von reinem Wasser bei 20°C beträgt 23,37 mbar und wurde somit durch die Anwesenheit von TEGO IL K5 um den Faktor 1,38 abgesenkt. Im Stand der Technik ist die Verwendung von LiBr als Absorbens und Wasser als Kältemittel sehr weit verbreitet. Nachteile des Stands der Technik sind

- die Kristallisation von LiBr in Wasser bei LiBr-Konzentrationen oberhalb 60 Massen% LiBr (je nach Systemtemperatur),

- die stark korrosive Wirkung von LiBr, was die Verwendung teurer korrosionsresistenter Materialien z.B. in einer Absorptionskältemaschine erfordert oder häufig mit Umweltbelastungen verbunden ist.

Die erfindungsgemäße ionische Flüssigkeit TEGO IL K5 beseitigt diese Nachteile des Stands der Technik. Neben ihrem sehr guten Absorptionsvermögen für Wasser kristallisiert diese ionische Flüssigkeit bei T ≥ 20 °C auch bei Konzentrationen größer 65 Massen% ionischer Flüssigkeit in Wasser nicht aus. Der Arbeitsbereich von Kälteprozessen wie z.B. Absorptionskältemaschinen ist somit bei Verwendung dieser ionischen Flüssigkeit deutlich größer, wodurch leistungsfähigere Absorptionskältemaschinen (gleicher Größe) oder kleinere Absorptionskältemaschinen (gleicher Leistung) gebaut werden können. Diese erfindungsgemäße ionische Flüssigkeit zeigt darüber hinaus eine deutlich geringere Korrosivität als LiBr und erlaubt somit auch die Verwendung preiswerterer Materialien in Kälteprozessen wie Absorptionskältemaschinen. Negative Umwelteinflüsse des LiBr werden ebenfalls durch diese erfindungsgemäße ionische Flüssigkeit deutlich reduziert.

Beispiel XI:

Die ionische Flüssigkeit Diethyl-polypropoxy-methylammoniumchlorid kann bei Degussa AG unter dem Namen TEGO IL P9 bezogen werden. Misst man, wie in

- W. Pennington; How to find accurate vapor pressures of lithium bromide water solutions; Refrig. Eng. 63 (May 1955) 57-61 oder
- D.A. Boryta, A.J. Maas, C.B. Grant; Vapor pressuretemperature-concentration relationship for system. lithiumbromide and water (40-70% lithiumbromide); J. Chem. Eng. Data 20 (1975) 316-319 oder
- S. Iyoki, T. Uemura; Vapor pressure of the water-lithium bormide system and water-lithium bromide-zinc bromidelithium chloride system at high temperatures; Int. J. Refrigeration 12 (1989) 278-282

beschrieben, das Absorptionsverhalten der ionischen Flüssigkeit TEGO IL P9 in Wasser bei 30 °C, so ergibt sich bei einer Lösung bestehend aus 94 Massen% TEGO IL P9 und 6 Massen% Wasser ein Wasserpartialdruck von 6 mbar.

Der Dampfdruck von reinem Wasser bei 30°C beträgt 42,41 mbar und wurde somit durch die Anwesenheit von TEGO IL P9 überraschenderweise um den Faktor 7,07 abgesenkt. Im Stand der Technik ist die Verwendung von LiBr als Absorbens und Wasser als Kältemittel sehr weit verbreitet. Nachteile des Stands der Technik sind

- die Kristallisation von LiBr in Wasser bei LiBr-Konzentrationen oberhalb 60 Massen% LiBr (je nach Systemtemperatur),
- die stark korrosive Wirkung von LiBr, was die Verwendung teurer korrosionsresistenter Materialien z.B. in einer Absorptionskältemaschine erfordert oder häufig mit Umweltbelastungen verbunden ist.

Die erfindungsgemäße ionische Flüssigkeit TEGO IL P9 beseitigt diese Nachteile des Stands der Technik. Neben ihrem sehr guten Absorptionsvermögen für Wasser kristallisiert diese ionische Flüssigkeit bei T ≥ 20 °C auch bei Konzentrationen größer 65 Massen% ionischer Flüssigkeit in Wasser nicht aus. Der Arbeitsbereich von Kälteprozessen wie z.B. Absorptionskältemaschinen ist somit bei Verwendung dieser ionischen Flüssigkeit deutlich größer, wodurch leistungsfähigere Absorptionskältemaschinen (gleicher Größe) oder kleinere Absorptionskältemaschinen (gleicher Leistung) gebaut werden können. Diese erfindungsgemäße ionische Flüssigkeit zeigt darüber hinaus eine deutlich geringere Korrosivität als LiBr und erlaubt somit auch die Verwendung preiswerterer Materialien in Kälteprozessen wie Absorptionskältemaschinen. Negative Umwelteinflüsse des LiBr werden ebenfalls durch diese erfindungsgemäße ionische Flüssigkeit deutlich reduziert.

Beispiel XII:

Die ionische Flüssigkeit 1-Ethyl-3-methylimidazoliummethansulfonat (CAS-Nr.:145022-45-3, im folgenden EMIM $MeSO_3$ genannt) kann bei der deutschen Firma Solvent Innovation GmbH bezogen werden. Misst man, wie in

- W. Pennington; How to find accurate vapor pressures of lithium bromide water solutions; Refrig. Eng. 63 (May 1955) 57-61 oder
- D.A. Boryta, A.J. Maas, C.B. Grant; Vapor pressuretemperature-concentration relationship for system lithiumbromide and water (40-70% lithiumbromide); J. Chem. Eng. Data 20 (1975) 316-319 oder
- S. Iyoki, T. Uemura; Vapor pressure of the water-lithium bormide system and water-lithium bromide-zinc bromidelithium chloride system at high temperatures; Int. J. Refrigeration 12 (1989) 278-282

beschrieben, das Absorptionsverhalten der ionischen Flüssigkeit EMIM $MeSO_3$ in Wasser bei 30 °C, so ergibt sich bei einer Lösung bestehend aus 87 Massen% EMIM $MeSO_3$ und 13 Massen% Wasser ein Wasserpartialdruck von 9 mbar.

Der Dampfdruck von reinem Wasser bei 30°C beträgt 42,41 mbar und wurde somit durch die Anwesenheit von EMIM $MeSO_3$ um den Faktor 4,7 abgesenkt. Im Stand der Technik ist die Verwendung von LiBr als Absorbens und Wasser als Kältemittel sehr weit verbreitet. Nachteile des Stands der Technik sind

- die Kristallisation von LiBr in Wasser bei LiBr-Konzentrationen oberhalb 60 Massen% LiBr (je nach Systemtemperatur),
- die stark korrosive Wirkung von LiBr, was die Verwendung teurer korrosionsresistenter Materialien z.B. in einer Absorptionskältemaschine erfordert oder häufig mit Umweltbelastungen verbunden ist.

Die erfindungsgemäße ionische Flüssigkeit EMIM $MeSO_3$ beseitigt diese Nachteile des Stands der Technik. Neben ihrem sehr guten Absorptionsvermögen für Wasser kristallisiert diese ionische Flüssigkeit bei $T \geq 20$ °C auch bei Konzentrationen größer 65 Massen% ionischer Flüssigkeit in Wasser nicht aus. Der Arbeitsbereich von Kälteprozessen wie z.B. Absorptionskältemaschinen ist somit bei Verwendung dieser ionischen Flüssigkeit deutlich größer, wodurch leistungsfähigere Absorptionskältemaschinen (gleicher Größe) oder kleinere Absorptionskältemaschinen (gleicher Leistung) gebaut werden können. Diese erfindungsgemäße ionische Flüssigkeit zeigt darüber hinaus eine deutlich geringere Korrosivität als LiBr und erlaubt somit auch die Verwendung preiswerterer Materialien in Kälteprozessen wie Absorptionskältemaschinen. Negative Umwelteinflüsse des LiBr werden ebenfalls durch diese erfindungsgemäße ionische Flüssigkeit deutlich reduziert.

Beispiel XIII:

Der erfindungsgemäße Prozess in Abbildung 1 kann ebenfalls nicht mit LiBr, aber mit geeigneten ionischen Flüssigkeiten, die bei 0 °C < T < 150 °C und 1 Massen % < $w_{IL}$ < 99 Massen% mit Wasser eine Flüssig-Flüssig-Mischungslücke ausbilden, betrieben werden. Besonders geeignete ionische Flüssigkeiten sind die vorstehend genannten Verbindungen, insbesondere:

a)1-Methyl-3-octylimidazoliumtetrafluoroborat (CAS: 244193-52-0)
b)Butylmethylpyrrolidinium-bis(trifluoromethylsulfonyl)imid (erhältlich von Solvent-Innovation; Bestellnr.: 99,331-1).

Anhand der vorgestellten Beispiele ist erkennbar, dass das Sorptionsmittelkonzept mit den erfindungsgemäßen Sorptionsmitteln auf ausgewählte Vertreter aller derzeit relevanten Kältemittelarten anwendbar ist. Es wurde gezeigt, dass jeweils mindestens ein Nachteil gemäß des Standes der Technik durch die Verwendung der erfindungsgemäßen Sorptionsmittel überwunden wurde.

Die erfindungsgemäßen ionischen Flüssigkeiten zur Anwendung als Sorptionsstoff in einem Arbeitsmedium für einen herkömmlichen Absorptionskältemaschinen- oder Absorptionswärmepumpenprozess weisen gegenüber dem Stand der Technik eine geringere Viskosität oder eine höhere Dichte, eine größere Wärmekapazität, eine geringere Flüchtigkeit, eine geringere Biotoxizität, eine größere chemische oder thermische Stabilität, einen geringeren Preis, eine größere Absorptionsfähigkeit für das Arbeitsmedium Wasser und/oder eine niedrigere Erstarrungstemperatur auf.

Ein Beispiel für eine ionische Flüssigkeit, die nicht für die Zwecke der vorliegenden Erfindung verwendet werden kann, ist 2-Hydroxyethylammoniumformiat. Diese Substanz weist eine Reihe von Nachteilen auf, die durch die Verwendung der erfindungsgemäßen Auswahl an ionischen Flüssigkeiten zumindest teilweise vermieden werden können:

➢ 2-Hydroxyethylammoniumformiat ist thermisch nur bis 150°C stabil [wie von N.Bicak in: Journal of Molecular Liquids 116 (2005) 15-18 beschrieben].
➢ 2-Hydroxyethylammoniumformiat besitzt bei 25 °C einen Dampfdruck von 2,2 x $10^{-2}$ Torr [wie von N.Bicak in: Journal of Molecular Liquids 116 (2005) 15-18 beschrieben]. Der Dampfdruck der erfindungsgemäßen ionischen Flüssigkeiten ist vorzugsweise kleiner als der von 2-Hydroxyethylammoniumformiat, was in Absorptionskältemaschinen zu Vorteilen bei der Trennung von Kälte- und Absorptionsmittel, aber auch bei den Betriebs- und Investitionskosten führt. Darüber hinaus bedeutet ein höherer Dampfdruck auch ein höheres Gefahrenpotential.
➢ Die Synthese von 2-Hydroxyethylammoniumformiat ist stark exotherm und erfordert im Gegensatz zur Synthese der erfindungsgemäßen ionischen Flüssigkeiten eine effiziente Kühlung zwecks Kontrolle der Gefahrenpotentiale.
➢ Das Viskositätsverhalten der ionischen Flüssigkeit 2-Hydroxyethylammoniumformiat ist stärker temperaturabhängig, als das Viskositätsverhalten ionischer Flüssigkeiten, die für die Zwecke der vorliegenden Erfindung besonders bevorzugt eingesetzt werden.
➢ 2-Hydroxyethylammoniumformiat ist toxischer als die ionischen Flüssigkeiten, die für die Zwecke der vorliegenden Erfindung vorzugsweise eingesetzt werden, wie z. B. 1-Ethyl-3-methylimidazolium-ethylsulfat (TEGO IL IMES).

➢ 2-Hydroxyethylammoniumformiat ist vergleichsweise teuer.

➢ 2-Hydroxyethylammoniumformiat hat eine vergleichsweise schlechte Hydrolysestabilität.

➢ 2-Hydroxyethylammoniumformiat ist der Gefahrenklasse reizend zugeordnet und darf nicht in das Abwasser gelangen, da es auf Fische und andere im Wasser lebende Organismen toxisch wirkt.

➢ 2-Hydroxyethylammoniumformiat wirkt bei hohen Temperaturen korrosiv.

➢ Das Verbrennen von 2-Hydroxyethylammoniumformiat führt zur Bildung toxischer Gase.

➢ Die vergleichsweise hohe Flüchtigkeit von 2-Hydroxyethylammoniumformiat bedingt Lösungsmittelverluste und die Gefahr der Bildung von explosionsfähigen Dämpfen.

Neben der Verwendung von flüssigen organischen Salzen als Sorptionsstoff oder Additiv in Kältemaschinen des Standes der Technik führt der Einsatz dieser Substanzen in erfindungsgemäßen Absorptionskältemaschinen, bei denen mindestens der Austreiber durch einen oder mehrere Settler ersetzt wird, zu energetischen Vorteilen gegenüber dem Stand der Technik. Nachfolgend ist beispielhaft eine vorteilhafte Ausführungsform des erfindungsgemäßen Verfahrens dargestellt (vergl. Fig. 1).

Das Arbeitsmedium wird nach dem Absorber 1 mittels einer Pumpe 2 in mindestens einen Wärmeübertrager 3a geführt, in dem es Wärme $Q_{zu}$ aufnimmt oder abgibt. Durch die Wärmeaufnahme bzw. Wärmeabfuhr befindet sich die am Punkt 1 noch homogen flüssige Arbeitslösung, die neben dem Sorptionsstoff und dem Kältemittel auch Additive enthalten kann, in einer flüssig-flüssig-Mischungslücke, welche sich durch eine obere oder untere kritische Lösungstemperatur auszeichnet. An den Wärmeübertrager 3a schließt sich mindestens ein Phasentrennapparat, der Settler 4 an, in dem sich die Arbeitslösung in zwei flüssige Phasen, eine sorptionsstoffreiche und eine kältemittelreiche Phase, entmischt. Der Settler kann koaleszenz- und sedimentationsfördernde Einbauten beinhalten.

Die kältemittelreiche Phase wird danach durch mindestens einen Wärmeübertrager 3b und eine Drossel 5a geleitet. Im Verdampfer 6 nimmt das größtenteils flüssige Kältemittel die Wärme $Q_{zu}$ auf und wird dabei zumindest teilweise in den dampfförmigen Aggregatzustand überführt. Anschließend kann eine erneute Wärmeübertragung in einem Wärmeübertrager (beispielsweise 3b) erfolgen, bevor die kältemittelreiche Phase in den Absorber eingeleitet, von einem Sorptionsstoff absorbiert und dabei die Absorptionswärme $Q_{ab}$ abgegeben wird.

Die absorbensreiche Phase kann nach dem Settler 4 erneut durch einen Wärmeübertrager (beispielsweise 3a) gefördert werden, bevor sie dann in einer Drossel 5b auf Absorberdruck entspannt und dem Absorber 1 zugeführt wird.

Je nach Sorptionsstoff und Kältemittel ist in dem erfindungsgemäßen Verfahren im Settler 4 eine Temperatur von -50 °C < T < 250 °C, bevorzugt von -20 °C < T < 200 °C und besonders bevorzugt von -10 °C < T < 180 °C bei einem sich einstellenden Settler-Systemdruck zwischen 0,01 bar < P < 200 bar zu wählen, im Absorber 1 eine Temperatur von -50 °C < T < 200 °C, bevorzugt von -30 °C < T < 150 °C und besonders bevorzugt von -20 °C < T < 100 °C bei einem Absorber-Systemdruck zwischen 0,01 bar < P < 60 bar zu wählen und in den Wärmeübertragern 3a und 3b jeweils eine Wärmeübertragungsfläche von 0,1 $m^2$ < A < 300 $m^2$, bevorzugt von 0,2 $m^2$ < A < 200 $m^2$ und. besonders bevorzugt von 0,3 $m^2$ < A < 150 $m^2$ bereit zu stellen.

Alternativ zu der abgebildeten vorteilhaften Ausführungsform des erfindungsgemäßen Verfahrens können die erfindungsgemäßen Sorptionsstoffe oder Additive auch in mindestens einer Stufe einer einstufigen oder mehrstufigen Absorptionskälteanlage mit mindestens einem beheiztem Austreiber und sich anschließendem Kältemittelkondensator - wie beispielhaft in Vauck, W.R.A. und Müller, H.A., Grundoperationen chemischer Verfahrenstechnik, 10. Auflage, Seite 527, Leipzig 1994, ISBN 3-342-00629-3 beschrieben - eingesetzt werden.

Weitere vorteilhafte Ausführungsformen des erfindungsgemäßen Verfahrens erhält man, wenn eine oder mehrere Stufen einer mehrstufigen Kältemaschine durch die oben abgebildete Ausführungsform ersetzt wurden oder erfindungsgemäße Sorptionsmittel oder Additive in mindestens einer Stufe der Kältemaschine zum Einsatz kommen, beispielsweise in der Lüftungs- oder Klimatechnik, wie in der Gebäudetechnik, in der Fahrzeugtechnik, der Schiffstechnik, der Luft- und Raumfahrt oder in der Containertechnik.

**Patentansprüche**

**1.** Arbeitsmedium für Kälteprozesse, umfassend mindestens einen Sorptionsstoff und mindestens ein Kältemittel, **dadurch gekennzeichnet, dass** der Sorptionsstoff mindestens ein nichtflüchtiges unter Normalbedingungen flüssiges organisches Salz enthält oder eine Mischung organischer Salze, mit der Maßgabe, dass diese unter Normalbedingungen flüssig ist, wobei das Salz oder die Mischung eine thermische Stabilität größer 150°C und eine Viskosität gemäß DIN 53 019 bei 20°C in einem Bereich von 1 bis 15.000 mPa·s aufweist und das Anion des organischen Salzes ausgewählt ist aus Hydroxid, Dicyanamid, Chlorid, Phosphat, Polyetherphosphaten, Alkylsulfonaten, Alkylsulfaten und Alkylcarboxylaten, ausgenommen Arbeitsmedien, die als Sorptionsstoff 1-Ethyl-3-methylimidazolium-methylsulfat, 1-Ethyl-3-methylimidazoliumacetat, 1-(1-Butyl)3-methylimidazolium-methylsulfat, 1-(1-Butyl)3-methylimidazoliumacetat, 1-(1-Dodecyl)3-methylimidazolium-methylsulfat, 1-(1-Tetradecyl)3-methylimidazolium-methylsulfat oder 1-(1-Hexadecyl)3-methylimidazolium-methylsulfat enthalten.

2. Arbeitsmedium nach Anspruch 1, **dadurch gekennzeichnet, dass** das Arbeitsmedium eine derartige Langzeitstabilität aufweist, dass es nach Lagerung bei 70°C für 8000 h einen Abbau von maximal 5 % bezogen auf die Ausgangszusammensetzung zeigt.

3. Arbeitsmedium nach Anspruch 1 oder 2, **dadurch gekennzeichnet, dass** das Arbeitsmedium einen $LD_{50}$-Wert größer 1000 mg/kg und/oder einen $EC_{50}$-Wert größer 50 mg/l hat.

4. Arbeitsmedium nach mindestens einem der vorangehenden Ansprüche, **dadurch gekennzeichnet, dass** das Arbeitsmedium beim Glassware-Korrosionstest gemäß ASTM D1384 einen maximalen Abtrag von 5 $g/m^2$ zeigt.

5. Arbeitsmedium nach mindestens einem der vorangehenden Ansprüche, **dadurch gekennzeichnet, dass** das Arbeitsmedium ein organisches Salz oder eine Salzmischung enthält, das/die den Partialdruck des Kältemittels, gemessen bei 30°C für eine Zusammensetzung, bestehend aus 90 Massen-% organisches Salz oder Salzmischung und 10 Massen-% Kältemittel, gegenüber dem Dampfdruck des Kältemittels bei 30°C um mindestens den Faktor 1,5 erniedrigt.

6. Arbeitsmedium nach mindestens einem der vorangehenden Ansprüche, **dadurch gekennzeichnet, dass** das Sorptionsmittel Distearyl-dimethylammoniumchlorid, 1-Methyl-2-nortalgalkyl-3-talgamidoethylimidazoliummethylsulfat, ethoxyliertes Cocosdiethanolammoniumchlorid, ethoxyliertes Kokosamin quarterniert mit Dimethylsulfat, Diethylpolypropoxyhydroxyethylammoniumphosphat, Diethyl-polypropoxy-hydroxyethylammoniumacetat, Diethyl-polypropoxy-methylammoniumchlorid, ethoxyliertes Talgamin quarteniert mit Diethylsulfat, Bis(2-hydroxyethyl)-dimethylammoniumchlorid, Bis(2-hydroxyethyl)-dimethylammonium-methylsulfonat, 1-Butyl-3-methylimidazoliumchlorid, 1-Ethyl-3-methylimidazoliumchlorid, N-Methylpyrroliniumacetat, N-Methyl-pyrroliniumchlorid, 1-Butyl-4-methylpyridiniumchlorid, 1-Ethyl-3-methylimidazolium-ethylsulfat, 1-Ethyl-3-methylimidazolium-methylsulfonat, 1-Ethyl-3-methylimidazoliumhydroxid, 1-Butyl-3-methylimidazolium-methansulfonat, Methyl-trin-butylammonium-methylsulfat, 1,2,4-Trimethylpyrazoliummethylsulfat, 1-Ethyl-2,3-di-methylimidazolium-ethylsulfat, 1,2,3-Trimethylimidazolium-methylsulfat, Methylimidazoliumchlorid, Cholinacetat, Tris-(2-hydroxyethyl)-methylammonium-methylsulfat, 1-Ethyl-3-methylimidazolium-dicyanamid, N-Ethyl-N-methylpyrrolidinium-dicyanamid, N-Propyl-N-methylpyrrolidinium-dicyanamid, N-Butyl-N-methylpyrrolidinium-dicyanamid, N-Hexyl-N-methylpyrrolidinium-dicyanamid, N-Pentyl-N,N,N-triethylammonium-dicyanamid, N-Hexyl-N,N,N-triethylammonium-dicyanamid, N-Hexyl-N,N,N-tributylammonium-dicyanamid, 1-Allyl-3-methylimidazoliumchlorid, 1-Butyl-1-methyl-pyrrolidinium-dicyanamid und/oder Tributylmethylphosphonium-methylsulfat enthält.

7. Arbeitsmedium nach Anspruch 1, **dadurch gekennzeichnet, dass** das Sorptionsmittel 1-Ethyl-3-methylimidazoliumhydroxid, 1-Ethyl-3-methylimidazoliumchlorid, 1-Butyl-4-methylpyridiniumchlorid, Bis-(2-hydroxyethyl)-dimethylammoniumchlorid oder Bis-(2-hydroxyethyl)-dimethylammonium-methylsulfonat ist und das Kältemittel 2,2,2-Trifluorethanol ist.

8. Arbeitsmedium nach Anspruch 1, **dadurch gekennzeichnet, dass** das Sorptionsmittel 1-Ethyl-3-methyl-imidazolium-ethylsulfat, 1-Ethyl-3-methylimidazoliumhydroxid, 1-Ethyl-3-methylimidazoliumchlorid, N-Methylpyrroliniumacetat oder N-Methyl-pyrroliniumchlorid ist und das Kältemittel R134a ist.

9. Verwendung des Arbeitsmediums gemäß mindestens einem der vorangehenden Ansprüche in Kälteprozessen und/oder Kältemaschinen.

10. Verwendung gemäß Anspruch 9, **dadurch gekennzeichnet, dass** mindestens eine Komponente des Arbeitsmediums unter Zu- oder Abfuhr von Wärme oder mechanischer Energie einen Kreisprozess durchläuft.

11. Verwendung nach Anspruch 9 oder 10 in einem Kälteprozess, **dadurch gekennzeichnet, dass** der Prozess eine flüssig-flüssig-Phasentrennung des Arbeitsmediums umfasst.

12. Verwendung nach Anspruch 11, **dadurch gekennzeichnet, dass** sich bei der flüssig-flüssig Phasentrennung eine Sorptionsmittel-haltige Flüssigphase mit einer Sorptionsmittelkonzentration von mindestens 20 Gew.-% und eine Kältemittel-haltige Flüssigphase mit einer Kältemittelkonzentration von mindestens 20 Gew.-% ausbilden.

13. Verwendung nach Anspruch 11 oder 12, **dadurch gekennzeichnet, dass** die beiden Phasen getrennt voneinander

abgezogen werden.

**14.** Verwendung gemäß mindestens einem der vorangehenden Ansprüche in der Lüftungs- oder Klimatechnik, in der Fahrzeugtechnik, in der Schiffstechnik, in der Luft- und Raumfahrt oder in der Containertechnik, in Kühlhäusern oder Kühltransportern, in der Verfahrenstechnik zur Lufttrocknung, zur Absorption von Gasen, in zentralen oder mobilen Anlagen zur Wärmerückgewinnung oder in Kühlschränken, Gefrierschränken oder Klimaanlagen.

**15.** Kältemaschine, enthaltend mindestens einen Wärmeüberträger, ein Expansionsorgan, einen Absorber und ein Arbeitsmedium gemäß mindestens einem der Ansprüche 1 bis 6.

**16.** Kältemaschine nach Anspruch 15, weiterhin umfassend einen Mixer-Settler.

## Claims

**1.** Working medium for refrigeration processes comprising at least one sorbent material and at least one refrigerant, **characterized in that** the sorbent material contains at least one nonvolatile organic salt which is liquid under standard conditions, or a mixture of organic salts, with the proviso that this is liquid under standard conditions, wherein the salt or the mixture has a thermal stability above 150°C and a viscosity as specified in DIN 53 019 at 20°C in a range from 1 to 15 000 mPa·s, and the anion of the organic salt is selected from hydroxide, dicyanamide, chloride, phosphate, polyether phosphates, alkylsulfonates, alkylsulfates and alkyl carboxylates, with the exception of working media that contain 1-ethyl-3-methylimidazolium methyl sulfate, 1-ethyl-3-methylimidazolium acetate, 1-(1-butyl)3-methylimidazolium methyl sulfate, 1(1-butyl)3-methylimidazolium acetate, 1-(1-dodecyl)3-methylimidazolium methyl sulfate, 1-(1-tetradecyl)3-methylimidazolium methyl sulfate, or 1-(1-hexadecyl)3-methylimidazolium methyl sulfate as sorbent material.

**2.** Working medium according to Claim 1, **characterized in that** the working medium has a long-term stability such that after storage at 70°C for 8000 h, it displays a degradation of a maximum of 5%, based on the starting composition.

**3.** Working medium according to Claim 1 or 2, **characterized in that** the working medium has an $LD_{50}$ value greater than 1000 mg/kg and/or an $EC_{50}$ value greater than 50 mg/l.

**4.** Working medium according to at least one of the preceding claims, **characterized in that** the working medium, in the glassware corrosion test as specified in ASTM D1384, shows a maximum erosion of 5 $g/m^2$.

**5.** Working medium according to at least one of the preceding claims, **characterized in that** the working medium contains an organic salt or a salt mixture which lowers the partial pressure of the refrigerant, measured at 30°C for a composition consisting of 90 mass% organic salt or salt mixture and 10 mass% refrigerant, by at least the factor 1.5 compared with the vapor pressure of the refrigerant at 30°C.

**6.** Working medium according to at least one of the preceding claims, **characterized in that** the sorbent material comprises distearyldimethylammonium chloride, 1-methyl-2-nortallowalkyl-3-tallowamidoethylimidazolium methyl sulfate, ethoxylated cocodiethanolammonium chloride, ethoxylated cocoamine quaternized with dimethyl sulfate, diethylpolypropoxyhydroxyethylammonium phosphate, diethylpolypropoxyhydroxyethylammonium acetate, diethylpolypropoxymethylammonium chloride, ethoxylated tallowamine quaternized with diethyl sulfate, bis(2-hydroxyethyl)dimethylammonium chloride, bis(2-hydroxyethyl)dimethylammonium methylsulfonate, 1-butyl-3-methylimidazolium chloride, 1-ethyl-3-methylimidazolium chloride, N-methylpyrrolinium acetate, N-methylpyrrolinium chloride, 1-butyl-4-methylpyridinium chloride, 1-ethyl-3-methylimidazolium ethyl sulfate, 1-ethyl-3-methylimidazolium methylsulfonate, 1-ethyl-3-methylimidazolium hydroxide, 1-butyl-3-methylimidazolium methanesulfonate, methyl-tri-n-butylammonium methyl sulfate, 1,2,4-trimethylpyrazolium methyl sulfate, 1-ethyl-2,3-dimethylimidazolium ethyl sulfate, 1,2,3-trimethylimidazolium methyl sulfate, methylimidazolium chloride, choline acetate, tris-(2-hydroxyethyl)methylammonium methyl sulfate, 1-ethyl-3-methylimidazolium dicyanamide, N-ethyl-N-methylpyrrolidinium dicyanamide, N-propyl-N-methylpyrrolidinium dicyanamide, N-butyl-N-methylpyrrolidinium dicyanamide, N-hexyl-N-methylpyrrolidinium dicyanamide, N-pentyl-N,N,N-triethylammonium dicyanamide, N-hexyl-N,N,N-triethylammonium dicyanamide, N-hexyl-N,N,N-tributylammonium dicyanamide, 1-allyl-3-methylimidazolium chloride, 1-butyl-1-methylpyrrolidinium dicyanamide and/or tributylmethylphosphonium methyl sulfate.

**7.** Working medium according to Claim 1, **characterized in that** the sorbent material is 1-ethyl-3-methylimidazolium

hydroxide, 1-ethyl-3-methylimidazolium chloride, 1-butyl-4 methylpyridinium chrloride, bis(2-hydroxyethyl)dimethylammonium chloride or bis(2-hydroxyethyl)dimethylammonium methylsulfonate and the refrigerant is 2,2,2-trifluoroethanol.

**8.** Working medium according to Claim 1, **characterized in that** the sorbent material is 1-ethyl-3-methylimidazolium ethyl sulfate, 1-ethyl-3-methylimidazolium hydroxide, 1 ethyl-3-methylimidazolium chloride, N-methylpyrrolinium acetate or N-methylpyrrolinium chloride and the refrigerant is R134a.

**9.** Use of the working medium according to at least one of the preceding claims in refrigeration processes and/or refrigerating machines.

**10.** Use according to Claim 9, **characterized in that** at least one component of the working medium passes through a cyclic process with supply or removal of heat or mechanical energy.

**11.** Use according to Claim 9 or 10 in a refrigeration process, **characterized in that** the process comprises a liquid-liquid phase separation of the working medium.

**12.** Use according to Claim 11, **characterized in that**, in the liquid-liquid phase separation, a sorbent material-containing liquid phase having a sorbent material concentration of at least 20% by weight and a refrigerant-containing liquid phase having a refrigerant concentration of at least 20% by weight form.

**13.** Use according to Claim 11 or 12, **characterized in that** the two phases are taken off separately from one another.

**14.** Use according to at least one of the preceding claims in ventilation or air conditioning, in automotive engineering, in marine engineering, in aviation and space travel or in container technology, in cold stores or refrigerated transporters, in process engineering for air drying, for absorption of gases, in central or mobile facilities for heat recovery or in refrigerators, freezers or air conditioners.

**15.** Refrigerating machine comprising at least one heat exchanger, an expansion element, an absorber and a working medium according to at least one of Claims 1 to 6.

**16.** Refrigerating machine according to Claim 15, further comprising a mixer-settler.

## Revendications

**1.** Fluide actif pour processus de réfrigération, comprenant au moins un sorbant et au moins un réfrigérant, **caractérisé en ce que** le sorbant contient au moins un sel organique non volatil, liquide dans les conditions normales, ou un mélange de sels organiques, étant entendu que ce dernier est liquide dans les conditions normales, le sel ou le mélange présentant une stabilité thermique supérieure à 150 °C et une viscosité selon DIN 53 019 à 20 °C dans une plage de 1 à 15 000 mPa·s et l'anion du sel organique est choisi parmi les anions hydroxyde, dicyanamide, chlorure, phosphate, polyétherphosphates, alkylsulfonates, alkylsulfates et alkylcarboxylates, à l'exclusion des fluides actifs qui contiennent comme sorbant du méthylsulfate de 1-éthyl-3-méthylimidazolium, de l'acétate de 1-éthyl-3-méthylimidazolium, du méthylsulfate de 1-(1-butyl)3-méthylimidazolium, de l'acétate de 1-(1-butyl)3-méthylimidazolium, du méthylsulfate de 1-(1-dodécyl)3-méthylimidazolium, du méthylsulfate de 1-(1-tétradécyl)3-méthylimidazolium ou du méthylsulfate de 1-(1-hexadécyl)3-méthylimidazolium.

**2.** Fluide actif selon la revendication 1, **caractérisé en ce que** le fluide actif a une stabilité à long terme telle qu'après un stockage à 70 °C pendant 8 000 h il présente une dégradation d'au maximum 5 % par rapport à la composition de départ.

**3.** Fluide actif selon la revendication 1 ou 2, **caractérisé en ce que** le fluide actif a une valeur $DL_{50}$ supérieure à 1 000 mg/kg et/ou une valeur $CE_{50}$ supérieure à 50 mg/l.

**4.** Fluide actif selon au moins l'une des revendications précédentes, **caractérisé en ce que** dans le test de corrosion de verrerie selon ASTM D1384 le fluide actif manifeste une abrasion maximale de 5 $g/m^2$.

**5.** Fluide actif selon au moins l'une des revendications précédentes, **caractérisé en ce que** le fluide actif contient un

sel organique ou un mélange de sels, qui abaisse par au moins le facteur 1,5 la pression partielle du réfrigérant, mesurée à 30 °C pour une composition constituée de 90 % en masse de sel organique ou mélange de sels et 10 % en masse de réfrigérant, par rapport à la tension de vapeur du réfrigérant à 30 °C.

**6.** Fluide actif selon au moins l'une des revendications précédentes, **caractérisé en ce que** le sorbant est le chlorure de distéaryl-diméthylammonium, le méthylsulfate de 1-méthyl-2-nor-alkyl de suif-3-amidoéthylimidazolium de suif, le chlorure de cocodiéthanolammonium éthoxylé, la cocosamine éthoxylée, quaternisée avec du diméthylsulfate, le phosphate de diéthyl-polypropoxy-hydroxyéthylammonium, l'acétate de diéthyl-polypropoxy-hydroxyéthylammonium, le chlorure de diéthyl-polypropoxy-méthylammonium, l'amine de suif éthoxylée, quaternisée avec du diéthylsulfate, le chlorure de bis(2-hydroxy-éthyl)-diméthylammonium, le méthylsulfonate de bis(2-hydroxyéthyl)-diméthylammonium, le chlorure de 1-butyl-3-méthylimidazolium, le chlorure de 1-éthyl-3-méthylimidazolium, l'acétate de N-méthylpyrrolinium, le chlorure de N-méthyl-pyrrolinium, le chlorure de 1-butyl-4-méthylpyridinium, l'éthylsulfate de 1-éthyl-3-méthylimidazolium, le méthylsulfonate de 1-éthyl-3-méthylimidazolium, l'hydroxyde de 1-éthyl-3-méthylimidazolium, le méthanesulfonate de 1-butyl-3-méthylimidazolium, le méthylsulfate de méthyl-tri-n-butylammonium, le méthylsulfate de 1,2,4-triméthyl-pyrazolium, l'éthylsulfate de 1-éthyl-2,3-diméthyl-imidazolium, le méthylsulfate de 1,2,3-triméthyl-imidazolium, le chlorure de méthylimidazolium, l'acétate de choline, le méthylsulfate de tris-(2-hydroxyéthyl)-méthylammonium, le dicyanamide de 1-éthyl-3-méthylimidazolium, le dicyanamide de N-éthyl-N-méthylpyrrolidinium, le dicyanamide de N-propyl-N-méthylpyrrolidinium, le dicyanamide de N-butyl-N-méthylpyrrolidinium, le dicyanamide de N-hexyl-N-méthylpyrrolidinium, le dicyanamide de N-pentyl-N,N,N-triéthylammonium, le dicyanamide de N-hexyl-N,N,N-triéthylammonium, le dicyanamide de N-hexyl-N,N,N-tributylammonium, le chlorure de 1-allyl-3-méthylimidazolium, le dicyanamide de 1-butyl-1-méthyl-pyrrolidinium et/ou le méthylsulfate de tributylméthyl-phosphonium.

**7.** Fluide actif selon la revendication 1, **caractérisé en ce que** le sorbant est l'hydroxyde de 1-éthyl-3-méthylimidazolium, le chlorure de 1-éthyl-3-méthylimidazolium, le chlorure de 1-butyl-4-méthyl-pyridinium, le chlorure de bis-(2-hydroxyéthyl)-diméthylammonium ou le méthylsulfonate de bis-(2-hydroxyéthyl)-diméthylammonium et le réfrigérant est le 2,2,2-trifluoroéthanol.

**8.** Fluide actif selon la revendication 1, **caractérisé en ce que** le sorbant est l'éthylsulfate de 1-éthyl-3-méthyl-imidazolium, l'hydroxyde de 1-éthyl-3-méthylimidazolium, le chlorure de 1-éthyl-3-méthylimidazolium, l'acétate de N-méthylpyrrolinium ou le chlorure de N-méthyl-pyrrolinium et le réfrigérant est R134a.

**9.** Utilisation du fluide actif selon au moins l'une des revendications précédentes, dans des processus de réfrigération et/ou des machines frigorifiques.

**10.** Utilisation selon la revendication 9, **caractérisée en ce qu'**au moins un composant du fluide actif passe par un processus cyclique avec apport ou dissipation de chaleur ou d'énergie mécanique.

**11.** Utilisation selon la revendication 9 ou 10 dans un processus de réfrigération, **caractérisée en ce que** le processus comprend une séparation de phases liquide-liquide du milieu actif.

**12.** Utilisation selon la revendication 11, **caractérisée en ce que** dans la séparation de phases liquide-liquide il se forme une phase liquide contenant du sorbant, ayant une concentration de sorbant d'au moins 20 % en poids, et une phase liquide contenant du réfrigérant, ayant une concentration de réfrigérant d'au moins 20 % en poids.

**13.** Utilisation selon la revendication 11 ou 12, **caractérisée en ce que** les deux phases sont déchargées séparément l'une de l'autre.

**14.** Utilisation selon au moins l'une des revendications précédentes, dans la technique de ventilation ou de climatisation, dans la technique des véhicules, dans la technique navale, dans la technique aérospatiale ou dans la technique des conteneurs, dans des entrepôts frigorifiques ou des véhicules frigorifiques, dans le génie des procédés pour le séchage à l'air, pour l'absorption de gaz, dans des installations centrales ou mobiles pour la récupération de chaleur ou dans des réfrigérateurs, des congélateurs ou des installation de climatisation.

**15.** Machine frigorifique, contenant au moins un échangeur thermique, un organe d'expansion, un absorbeur et un fluide actif selon au moins l'une des revendications 1 à 6.

**16.** Machine frigorifique selon la revendication 15, comprenant en outre un mélangeur-décanteur.

Fig. 1:

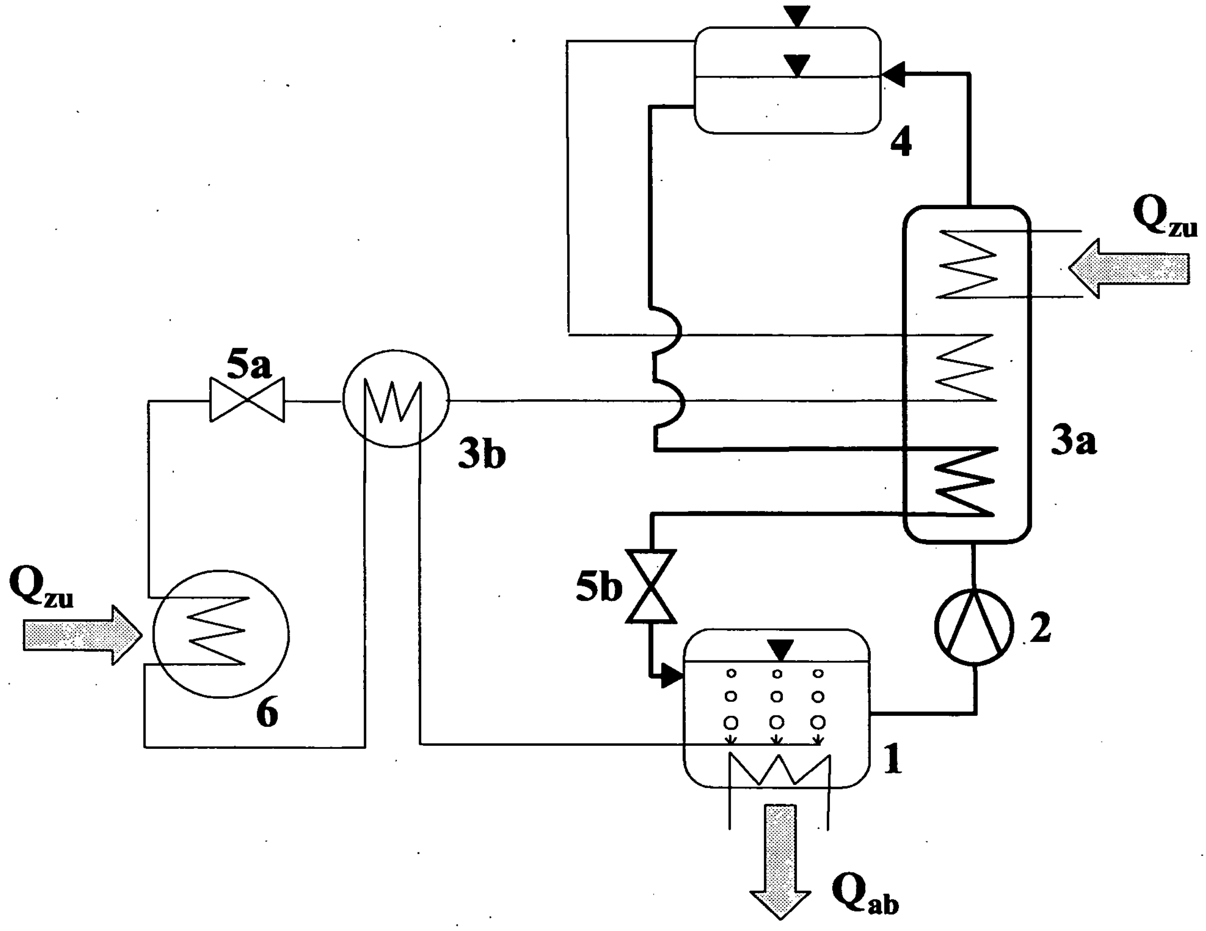


Vorteilhafte Ausführungsform des erfindungsgemäßen Verfahrens

1: Absorber, 2: Pumpe, 3a, 3b: Wärmeübertrager, 4: Settler,

5a, 5b: Drossel, 6: Verdampfe

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2005113702 A1


### In der Beschreibung aufgeführte Nicht-Patentliteratur


- **VAUCK, W.R.A. ; MÜLLER, H.A.** Grundoperationen chemischer Verfahrenstechnik. 1994
- **LUEGER.** Lexikon der Technik. 1970, vol. 16
- **LUEGER.** *Lexikon der Technik,* 1970, vol. 16
- **ZIEGLER, F.** *Int. J. Therm. Sci.,* 1999, vol. 38, 191-208
- **WONGSUWAN, W. et al.** *Applied Thermal Engineering,* 2001, vol. 21, 1489-1519
- **CHEUNG, K. et al.** *International Journal of Refrigeration,* 1996, vol. 19, 473-481
- **NEZU, Y. ; HISADA, N. ; ISHIYAMA, T. ; WATANABE, K.** Thermodynamic properties of working-fluid pairs with R-134a for absorption refrigeration system. *Natural Working Fluids 2002, IIR Gustav Lorentzen Conference,* 17. September 2002, 446-453
- **KIM, K.-S. et al.** stellen in ihren Beiträgen (1) "Ionic Liquids as new working fluids for use in absorption heat pumps or chillers. *fifteenth symposium on thermophysical properties,* 22. Juni 2003
- Refractive index and heat capacity of 1-butyl-3-methylimidazolium bromide and 1-butyl-3-methylimidazolium tetrafluoroborate and vapor pressure of binary systems for 1-butyl-3-methylimidazolium bromide + trifluoroethanol and 1-butyl-3-methylimidazolium tetrafluoroborate + trifluoroethanol. *Fluid Phase Equilibria,* 2004, vol. 218, 215-220
- **KIM, J.-S. et al.** *Applied Thermal Engineering,* 1999, vol. 19, 217-225
- **GLEBOV, D. ; SETTERWALL, F.** *International Journal of Refrigeration,* 2002, vol. 25, 538-545
- **ZIEGLER, F. ; GROSSMAN, G.** *International Journal of Refrigeration,* 1996, vol. 19, 301-309
- **CHUA, H.T. et al.** *International Journal of Refrigeration,* 2000, vol. 23, 412-429
- **YOON, J.-I. ; O.-K. KWON.** *Energy,* 1999, vol. 24, 795-809
- **F. HILLERNS.** Thermophysikalische Eigenschaften und Korrosionsverhalten von Kälteträgern. *Die Kälte & Klimatechnik,* Oktober 1999, 110-114
- *Angewandte Chemie,* 2000, vol. 112, 3926-3945
- **P. WASSERSCHEID ; T. WELTON.** Ionic Liquids in Synthesis. Wiley-VCH
- *CHEMICAL ABSTRACTS,* 79917-90-1
- *CHEMICAL ABSTRACTS,* 65039-09-0
- *CHEMICAL ABSTRACTS,* 143314-17-4
- *CHEMICAL ABSTRACTS,* 342573-75-5
- *CHEMICAL ABSTRACTS,* 342789-815
- *CHEMICAL ABSTRACTS,* 342789-81-5
- *CHEMICAL ABSTRACTS,* 13106-24-6
- **D. R. MACFARLANE et al.** Ionic liquids based on imidazolium, ammonium and pyrrolidinium salts of the dicyanamide anion. *Green Chemistry,* 2002, vol. 4, 444-448
- **DRUCKSCHRIFT J. ; PERNAK, I. GOK.** *New Ionic Liquids with Organic Anions*
- *Polish J. Chem.,* 2003, vol. 77, 975-984
- **DRUCKSCHRIFT P. WASSERSCHEID ; T. WELTON.** Ionic Liquids in Synthesis. Wiley-VCH
- **VON SADOWSKI G. ; MOKRUSHINA L. V. ; ARLT, W.** Finite and infinite dilution activity coefficients in polycarbonate systems. *Fluid Phase Equilibria,* 1997, vol. 139, 391-493
- **GMEHLING J. ; KOLBE B.** *Thermodynamik*
- **PRAUSNITZ J. M. ; LICHTENTHALER R. N. ; DE AZEVEDO E. G.** *Molecular Thermodynamics of Fluid-Phase Equilibria*
- **STEPHAN K. ; MAYINGER F.** Thermodynamik. *Mehrstoffsysteme und chemische Reaktionen,* vol. 2
- **KIM, K.S. et al.** Ionic Liquids as new working fluids for use in absorption heat pumps or chillers. *fifteenth symposium on thermophysical properties,* June 22-27, 2003
- **YOKOZEKI, A.** *Applied Energy,* 2005, vol. 80, 383-399
- **W. PENNINGTON.** How to find accurate vapor pressures of lithium bromide water solutions. *Refrig. Eng.,* Mai 1955, vol. 63, 57-61
- **D.A. BORYTA ; A.J. MAAS ; C.B. GRANT.** Vapor pressuretemperature-concentration relationship for system lithiumbromide and water (40-70% lithiumbromide). *J. Chem. Eng.,* 1975, vol. 20, 316-319

- **S. IYOKI ; T. UEMURA.** Vapor pressure of the water-lithium bormide system and water-lithium bromide-zinc bromidelithium chloride system at high temperatures. *Int. J. Refrigeration,* 1989, vol. 12, 278-282
- **D.A. BORYTA ; A.J. MAAS ; C.B. GRANT.** Vapor pressuretemperature-concentration relationship for system. lithiumbromide and water (40-70% lithiumbromide). *J. Chem. Eng.,* 1975, vol. 20, 316-319
- **SOLVENT-INNOVATION.** *Bestellnr.,* vol. 99, 331-1
- **N.BICAK.** *Journal of Molecular Liquids,* 2005, vol. 116, 15-18
- **VAUCK, W.R.A. ; MÜLLER, H.A.** Grundoperationen chemischer Verfahrenstechnik. 1994, 527